# EUROPÄISCHE PATENTSCHRIFT

(11) **EP 1 937 891 B1**
(45) Veröffentlichungstag und Bekanntmachung des Hinweises auf die Patenterteilung: **30.09.2009**
(21) Anmeldenummer: 06790257.7
(22) Anmeldetag: 09.10.2006
(51) Int. Cl.: D06P 1/50

(54) **VERDICKER FÜR FARBSYSTEME**
THICKENER FOR COLOUR SYSTEMS
EPAISSISSANT POUR SYSTEMES DE PEINTURE

(30) Priorität: 11.10.2005 AT 16522005
(43) Veröffentlichungstag der Anmeldung: 02.07.2008
(73) Patentinhaber: Agrana Stärke GmbH, 3950 Gmünd (AT)
(72) Erfinder: JETZINGER, Franz, A-3013 Tullnerbach (AT); KOZICH, Martin, A-1020 Wien (AT); WASTYN, Marnik, Michel, A-2320 Schwechat (AT)
(74) Vertreter: Sonn & Partner Patentanwälte
(86) Internationale Anmeldenummer: PCT/AT2006/000408
(87) Internationale Veröffentlichungsnummer: WO 2007/041732

(56) Entgegenhaltungen:
- DE-A1- 4 241 289
- GB-A- 1 240 404

## Beschreibung

Die vorliegende Erfindung betrifft den kombinierten Einsatz von Stärken oder Stärkederivaten mit hochviskosen Cellulosen als Verdicker in Farbsystemen, welche sich durch überraschend hohe, nicht zu erwartende Verdickerleistungen auszeichnen sowie die daraus resultierenden Innen- und Außen- Dispersionsfarben.

Dem Fachmann ist bekannt, dass gängige Innen- und Außenwandfarben auf Basis wässriger Systeme häufig vier Hauptkomponenten, nämlich Füllstoffe, Pigmente, Bindemittel und Wasser, sowie eine Vielzahl wichtiger Kleinkomponenten, wie Dispergiermittel, Netzmittel, Entschäumer, Filmbildehilfsmittel, Verzögerer, Konservierungsmittel, Biozide, Salze, Säuren, Basen, Puffer, Stabilisatoren, Wasserglas, Silica, organische Lösungsmittel, Verdickungsmittel u.a. enthalten.

Auch kennt der Fachmann die verschiedensten Differenzierungen bzw. Synonyme für solche Dispersionsbindemittel-basierende Farben, wie Dispersionsfarbe, Wandfarbe, Innenfarbe, scheuerfeste Farbe, waschbare Farbe, Emulsionsfarbe, Glanzfarbe, Hochglanzfarbe, Satinfarbe, Außenfarbe, Fassadenfarbe, Füllfarbe, Silikatfarbe, Einschichtfarbe, Zweischichtfarbe, Lösungsmittelfarbe, Baufarbe, Bautenanstrich, Betonbeschichtung, kunstharzgebundener Putz, mineralischer Putz, Trockendispersionsfarbe, Spritzfarbe, Grundierfarbe, Sandpaint u.a.

Weiters ist dem Fachmann bekannt, dass in solchen Innen- und Außenwandfarben überwiegend Cellulosederivate als Verdicker und Rheologiegeber eingesetzt werden. Dabei handelt es sich um Hydroxyethylcellulosen (HEC), Methylcellulosen (MC), Methylhydroxyethylcellulosen (MHEC), Ethylhydroxyethylcellulosen (E-HEC), Hydroxypropylcellulosen (HPC), Carboxymethylcellulosen (CMC), Carboxymethylhydroxyethylcellulose (CMHEC), aminierte Cellulosen u.a.. Häufig sind diese Pulverprodukte zusätzlich quellverzögernd modifiziert.

Je nach Verdickerwirkung kann man zwischen hochviskosen, mittelviskosen und niedrigviskosen Cellulosen unterscheiden. Um dem Farbhersteller einen Richtwert der Verdickerleistung zu geben, werden oft die Viskositäten von 2%igen Lösungen zur groben Klassifizierung herangezogen. Eine Cellulose mit einer, mittels Brookfield-Rotationsviskosimeter bei 5 Upm und 25°C gemessenen, Viskosität von ca. 2.000 mPa.s (und darunter) bedeutet demnach eine niedrigviskose Variante und ein Produkt mit 50.000 mPa.s (und höher) stellt eine hochviskose Cellulose dar. Produkte, die Viskositäten aufweisen, die dazwischen liegen, können als mittelviskose Cellulosen klassifiziert werden. Diese Viskositätsklassifizierung erlaubt auch einen Vergleich von unterschiedlich substituierten Cellulosen, so dass auch z.B. Methylcellulosen und Hydroxyethylcellulosen damit vergleichend bewertet werden können. Üblicherweise werden niederviskose und mittelviskose Celluloseether als Verdicker in Dispersionsfarben eingesetzt. Dies ist besonders der Fall bei qualitativ hochwertigen Farben. Vereinzelt werden aber auch hochviskose Celluloseether zur Einstellung der Rheologie von Farben verwendet, insbesonders in qualitativ minderwertigen Farben.

Neben den Cellulosen werden vereinzelt auch noch andere Verdicker, wie anorganische Bentonite, synthetische Polymere und Copolymere auf Basis Methacryl, Acryl, Vinyl und PUR, und organische, modifizierte Materialien auf Basis Guar, Alginate, Pektin, Xanthan, Traganat Gum und auch Stärke, eingesetzt.

Stärken und Stärkederivate können in Einfachfarben, nach dieser Definition sind das Farben, welche keine synthetischen Bindemittel enthalten, zudem als Bindemittel eingesetzt werden. In der WO 97/12946 wird neben der Verwendung von Milchkasein, Eiproteinen und Eidotter auch der Einsatz von Kartoffelmehl und Stärkepasten in wasserbasierenden Außen- und Innenwandfarben beschrieben. In Summe werden dabei bis 30% an natürlichen Bindemitteln eingesetzt. Ähnliches wird in der EP-A 1 477 535 geoffenbart. Auch hier hat die Stärke in Einfachfarbsystemen die Funktion des Bindemittels.

Die US-A-4 716 186 betrifft kaltwasserlösliche, granuläre Stärkederivate und ihre Verwendung als Verdickungsmittel in Dispersionsfarben. Die Stärkederivate sind dabei ausgewählt aus der Gruppe bestehend aus granulären methylierten, ethylierten oder carboxymethylierten Stärkematerialien, wobei die Verdickungsmittel (1) zu zumindest 90% löslich sind in 25°C. Wasser (2) einen mittleren Methyl-, Ethyl- oder Carboxymethyl-Substitutionsgrad im Bereich von etwa 0,15 bis etwa 1,0 derartiger Substituenten pro Anhydroglucoseeinheit im Stärkemolekül und (3) ein Verhältnis von anorganischen Anionengehalt (in Masseprozent basierend auf Trockenmasse des Stärkederivats) zu Methyl-, Ethyl- oder Carboxyl-Substitutionsgrad (D.S.) von etwa 14 oder darunter aufweisen.

In der EP-A-0 979 850 werden assoziative Verdicker geoffenbart. Assoziative Verdicker bilden nicht von sich aus ein Netzwerk, sondern führen zur Assoziation von Teilchen, die bereits in der Flüssigkeit vorhanden sind. Sie haben Tensidcharakter, da sie sowohl hydrophile als auch hydrophobe End- und Seitengruppen aufweisen. Dadurch bilden sie z.B. Micellen und tragen so zur Viskositätserhöhung bei. Darüber hinaus können sie in Dispersionen, z.B. in Wasserlacken, mit den vorhandenen Latexteilchen in Verbindung treten und diese über "Micellbrücken" verbinden.

Die DE-A-2 005 591 schließlich betrifft Textildruckpasten bestehend aus Wasser, einem Farbstoff, mindestens einem polymeren organischen Verdickungsmittel, das sich nahezu vollständig in Wasser löst, und mindestens einem in Kaltwasser quellenden, vernetzten, jedoch in Kalt- und/oder Heißwasser praktisch unlöslichen Stärkederivat.

Die US 5 118 732 betrifft eine regenresistente Dichtungszusammensetzung, welche wässrige Polymer-Dispersionen, nichtionische Zellulose-Ether ausgewählt aus der Gruppe bestehend aus Hydroxyethyl, Hydroxyethyl-Methyl, Hydroxypropyl-Methyl und Hydroxypropyl-Zellulose sowie gegebenenfalls typische Additive, wie Füllstoffe, Pigmente, Weichmacher, usw. enthält.

In der EP 0 307 915 A2 werden anionische wasserlösliche Carboxymethyl-Hydroxyethyl-Derivate von Zellulose-Ethern geoffenbart, welche als Verdicker in wässrigen Zusammensetzungen, wie auf Wasser basierenden Farben, verwendbar sind und welche eine hydrophobe Alkyl, Alphahydroxyalkyl oder Azyl-Modifizierungsgruppe mit 8-25 Kohlenstoffatomen aufweisen und in der Polymer-Struktur ein Masseverhältnis von etwa 0,1 bis etwa 4% darstellen, wobei der Carboxymethyl-Substitutionsgrad zwischen etwa 0,05 bis < 1 ist.

Die EP 0 601 404 A1 betrifft bestimmte hochsubstituierte Carboxymethyl-Sulfoethylcelluloseether (CMSEC) und ein vereinfachtes und wirtschaftliches Verfahren zur Herstellung solcher hochsubstituierter Ether sowie deren Verwendung als Verdickungsmittel im Textildruck.

Die JP 03-0348971 A schließlich betrifft aufschäumende Feuerschutzfarbe auf Wasserbasis, welche eine Emulsion aus synthetischem Harz, ein Aufschäummittel und ein Carbonisierungsmittel sowie Viskositätsregler enthält, welche Zellulose-Derivate enthalten und eine Viskosität von 10-400 Pa.Sekunde aufweisen.

Gemäß "Starch Derivatisation" von K.F. Gotlieb und A. Capelle, Wageningen Academic Publishers, The Netherlands, 2005, Seite 47, werden in der Stärkeindustrie - offenbar für Tapetenkleister - bereits seit langem Hydroxyethyl-Cellulosen dazu verwendet, als Verdickungsmittel in technischen Anwendungen verwendete (vernetzte) Carboxymethyl-Stärken zu "verbessern". Spezielle Anwendungen werden nicht erwähnt, auch wurde ausdrücklich kein synergistischer Effekt beobachtet.

Der prinzipielle Vorteil der Verwendung von Stärke, modifizierter Stärke und Stärkederivaten in technischen Produkten ist der, dass es sich bei Stärke um einen natürlichen und sich jährlich erneuernden Rohstoff handelt, der kostengünstig und im Überschuss vorhanden ist, und unter umweltschonenden Verfahren gewonnen und modifiziert werden kann. Daher wird in der Technik die Stärke auch tatsächlich häufig für die verschiedensten Verwendungszwecke eingesetzt.

Die Stärkederivate können dabei in technischen Applikationen verschiedenste Funktionen erfüllen. So werden Stärken und Stärkederivate als Kleber, als Beschichtungsstoff und u.a. als Rheologiegeber, insbesondere als Verdickungsmittel, bereits in vielen Applikationen verwendet. Je nach Anforderung und gewünschten Zusatzeigenschaften werden dafür die Stärken mehr oder weniger stark modifiziert. Für die Verwendung als Verdicker werden dabei häufig veretherte und/oder veresterte Produkte eingesetzt. Solche Produkte sind auch oft vernetzt. Die Vernetzung führt dabei zu einer gewissen Stabilisierung und damit Scherstabilität des Produktes. Die Substitution soll andererseits eine starke Quellung und damit eine starke Wasserbindung hervorrufen, was zu Produkten mit starker Verdickungswirkung führt.

In Dispersionsfarben haben Verdickungsmittel auf Stärkebasis kaum eine Bedeutung. Alle großen Stärkehersteller verweisen zwar darauf, dass bestimmte Produkte in Farben eingesetzt werden können, im Gegensatz zu den Papier-, Bau- und Textilanwendungen hat jedoch kein Hersteller eigene Produkte, geschweige denn eigene Produktpaletten für den Farbenbereich. Die Stärkeprodukte weisen im alleinigen Einsatz als Rheologiegeber eine zu geringe Verdickerleistung auf, um mit den Cellulosen konkurrieren zu können. Dementsprechend konnten sich solche Produkte nicht am Markt durchsetzen.

Überraschenderweise wurde nun gefunden, dass die kombinierte Verwendung von Stärke(n) bzw. Stärkederivaten zusammen mit mindestens einer hochviskosen Cellulose, wobei die Cellulose eine Viskosität > 50.000 mPa.s, vorzugsweise > 60.000 mPa.s, insbesondere > 75.000 mPa.s, gemessen mittels Brookfield - Rotationsviskosimeter als 2%ige gequollene wässrige Lösung bei 5 Upm und 25°C, aufweist, als Verdicker in dispersionsbindemittelbasierenden Farbsystemen besondere Vorteile bringt. Mit dem erfindungsgemäßen kombinierten Einsatz von Stärke - Cellulose Verdickern werden auch die Stärken konkurrenzfähig. Solche Farbverdickerkombinationen führen, im Vergleich zu reinen Cellulosen, beinahe zu identen Viskositäten und zeigen damit überraschenderweise viel höhere Viskositäten, als auf Basis der großen Differenz der Einzelkomponenten zu erwarten wäre. Im wässrigen System können zwischen 25 und annähernd 40% der Cellulosen durch Stärkederivate ersetzt werden, ohne dass das wässrige System an Viskosität verliert. Im Farbsystem können ebenfalls die erfindungsgemäßen Kombinationen an Farbverdicker in Anteilen von 0,1 - 30%, bevorzugt bis 25% Stärke die hochviskosen, bzw. in Anteilen von 0,1 - 65%, bevorzugt bis zu 50% Stärke die mittelviskosen Cellulosen substituieren.

In Farbsystemen werden üblicherweise zwischen 0,05 - 1,2%, bevorzugt 0,2 - 0,5 % an Celluloseverdicker eingesetzt. Bei der erfindungsgemäß vorgesehenen Substituierung von bis zu 65%, bevorzugt 20 - 50% der Cellulosemenge durch Stärke, würde dies einem Stärkeeinsatz von - 0,01 - 0,78 %, bevorzugt 0,1% - 0,25% im Farbsystem bedeuten.

Neben den erwähnten, offenkundigen Viskositätsnachteilen der Stärken bei alleinigem Einsatz als Verdicker in Dispersionsfarben gibt es noch einen zweiten daraus resultierenden, viel wesentlicheren Grund für die geringe Marktakzeptanz, nämlich jenen der Verschlechterung der Farbqualität. Die geringere Verdickerleistung der Stärken kann man zwar durch die zwei bis dreifache Einsatzmenge an Produkt ausgleichen, diese erhöhte Menge führt jedoch zu dramatisch schlechteren Farbeigenschaften, insbesondere der Wasch- und Scheuerbeständigkeit.

Der erfindungsgemäße kombinierte Einsatz von Stärken mit Cellulosen bzw. die daraus resultierende Farbe, zeigt diese Nachteile jedoch nicht. Dadurch, dass nur für Cellulosen übliche Einsatzmengen an kombiniertem Verdicker eingesetzt werden, kommt es zu keinem "Überschuss" an löslichem Polymer, und in der Folge auch zu keinen Verschlechterungen der Wasch- und Scheuerbeständigkeit gegenüber Farben mit reinem Celluloseeinsatz. Ein wesentliches Hindernis für den Einsatz von Stärken in diesen Systemen fällt damit weg.

Weiters betrifft die vorliegende Erfindung ein Verfahren zur Herstellung von dispersionsbindemittelbasierenden Farbsystemen, wobei dem Farbsystem eine Kombination von Stärke(n) zusammen mit mindestens einer hochviskosen Cellulose als Verdicker trocken oder als Lösungen zugesetzt wird, wobei die Cellulose eine Viskosität > 50.000 mPa.s, vorzugsweise > 60.000 mPa.s, insbesondere > 75.000 mPa.s aufweist, gemessen mittels Brookfield - Rotationsviskosimeter als 2%ige gequollene wässrige Lösung bei 5 Upm und 25°C.

Alternativ kann dem Farbsystem Stärke(n) und mindestens eine hochviskose Cellulose mit einer Viskosität > 50.000 mPa.s, vorzugsweise > 60.000 mPa.s, insbesondere > 75.000 mPa.s, gemessen mittels Brookfield - Rotationsviskosimeter als 2%ige gequollene wässrige Lösung bei 5 Upm und 25°C, getrennt zu unterschiedlichen Zeitpunkten als Verdicker zugemischt werden.

Die in Farben eingesetzten Cellulosen sind üblicherweise quellverzögert, was ein homogenes Einrühren im Wasser ohne Klumpenbildung ermöglichen soll. Diese Quellverzögerung bricht bei alkalischen pH Werten sehr rasch auf. Folglich können solche quellverzögerten Cellulosen in Trockenform nur am Beginn der Farbherstellung eingebracht werden. Eine spätere Zugabe in das Farbsystem, insbesondere nach der Zugabe der Pigmente und Füllstoffe, würde zu einem zu raschen Anquellen der Cellulosen, und folglich zu einem Verklumpen der Cellulose führen. Üblicherweise wird in das vorgelegte Wasser die Cellulose eingerührt, gefolgt von Laugen oder Ammoniak, Dispergier- und Netzmittel, Pigmenten, Füllstoffen, Entschäumer, Konservierungsmittel und Bindemittel. Nichtquellverzögerte Cellulosen sind nur mit einem hohen technologischen Aufwand in ein wässriges System einzubringen, weshalb solche Produkte im Farbenmarkt kaum anzutreffen sind.

Die Stärkeprodukte können jedoch auch zu einem späteren Zeitpunkt dem Farbsystem zugeführt werden, ohne zu Inhomogenitäten zu führen. So können die in den eigenen Versuchen verwendeten Stärken am Beginn zusammen mit der Cellulose, nach den Füllstoffen oder sogar nach dem Bindemittel eingebracht werden. Dies bringt Vorteile durch eine flexiblere Rezeptierung bzw. die Möglichkeit, die Viskosität am Ende der Rezeptur mit der Stärke einzustellen. Vorzugsweise wird dabei die Stärke der Stärke - Cellulose Kombination dem Farbsystem am Ende der Farbrezeptur, vor der Zugabe des Bindemittels, zugemischt.

Am Markt sind Cellulosen mit unterschiedlichen Polymerisationsgraden und Viskositäten anzutreffen, wobei in der EU die mittelviskosen Produkte im Farbensektor den Hauptanteil darstellen. Letztere werden vor allem in Qualitätsfarben mit höherer Einsatzmenge eingesetzt, während in Billigfarben eher hochviskose Produkte mit geringen Einsatzmengen verwendet werden. Die Qualitätsfarben zeichnen sich durch hohe Viskositäten, einen geringen Ablauf (Sagging), einen guten Verlauf (Leveling), gute Wasch- und Scheuerbeständigkeiten (scrub resistance), geringe Spritzneigung (spatter resistance) und gute Deckkraft aus. Die Billigfarben zeigen meist neben einer geringeren Deckkraft und einer mäßigen Wasch- und Scheuerbeständigkeit eine schlechtere Ablaufresistenz und eine hohe Spritzneigung, wobei die schlechtere Ablaufresistenz und die Spritzneigung durch die geringe Menge an Verdicker hervorgerufen wird.

Mit dem erfindungsgemäßen kombinierten Einsatz von Cellulose - Stärke Verdickern können solche mittelviskose Cellulosederivate sehr gut ersetzt, und in einigen Eigenschaften, wie vermindertem Schimmer (Sheen) und hervorragender Rolleigenschaft, sogar überraschenderweise Verbesserungen in den daraus resultierenden Farben erzielt werden. Demgemäß wird erfindungsgemäß eine Dispersionsfarbverdickerkombination vorgesehen, umfassend Stärke(n) bzw. Stärkederivaten zusammen mit mindestens einer hochviskosen Cellulose, wobei die Cellulose eine Viskosität > 50.000 mPa.s, vorzugsweise > 60.000 mPa.s, insbesondere > 75.000 mPa.s aufweist, gemessen mittels Brookfield - Rotationsviskosimeter als 2%ige gequollene wässrige Lösung bei 5 Upm und 25°C. Durch die möglichen Kombinationen an hochviskoser Cellulose mit Stärke können sehr hohe Anteile, konkret bis etwa 60%, an Stärke eingebracht werden, wobei die Gesamteinsatzmenge jener der mittelviskosen Cellulosen entspricht, und somit die guten Eigenschaften der Qualitätsfarben garantiert. Zusätzlich sind dabei noch Verbesserungen in der Rolleigenschaft erzielbar. Somit sind mit der erfindungsgemäßen Farbverdickerkombination Farben herstellbar, welche hervorragende Eigenschaften in der Wasch- und Scheuerbeständigkeit sowie im Verarbeitungsverhalten aufweisen.

Vorzugsweise sind die erfindungsgemäß eingesetzten hochviskosen Cellulosen ausgewählt aus der Gruppe umfassend Hydroxyethylcellulose (HEC), Methylcellulose (MC), Methylhydroxyethylcellulose (MHEC), Ethylhydroxyethylcellulose (EHEC), Hydroxypropylcellulose (HPC), Carboxymethylcellulose (CMC), kationische Cellulosen sowie Kombination hievon.

Manchmal wird es vom Kunden gewünscht, dass das Verdickungsmitteln besondere rheologische Eigenschaften aufweist. Dies kann durch Zusatz von speziellen Hilfsmittel und Rheologiegeber zum Verdickersystem erreicht werden. In diesem Fall können der Stärke und/oder der hochviskosen Cellulose der Farbverdickerkombination noch weitere Hilfsstoffe und Rheologiegeber, wie Salze, Säuren, Basen, Polyurethane, synthetische Polymerisate und Copolymerisate auf Basis Acryl- und Methacrylsäure, natürliche und halbnatürliche Polymere auf Basis Chitosan, Pektin, Tragant, Guar, Alginat zugesetzt werden. Gerade in Kombination mit Stärke können verstärkte Verbesserungen in der Farbstabilität, dem Verlauf, dem Ablauf, dem Roll- und Spritzverhalten erreicht werden.

Die beschriebenen Farbverdickerkombinationen können auch in Trockendispersionsfarben bzw. ähnlichen Trockenfarbensystemen eingesetzt werden. Gerade in diesem Anwendungsbereich, weist die Stärke durch ihre gute Löslichkeit große Vorteile auf.

Solche Farbverdickerkombinationen sind zudem für die Anwendung in dispersionbindemittelgebundenen Anstrichen und Grundierungen von Deckenplatten bzw. anderen Baumaterialien prädestiniert. Hier kommen die besonderen rheologischen Eigenschaften der Stärke zu tragen.

Für den Einsatz als Stärke - Cellulose Farbverdickerkombination in Dispersionsfarben eignen sich verschiedenste Stärken und Stärkederivate. Gemäß einer bevorzugten Ausführungsform der vorliegenden Erfindung basiert die Stärke bzw. die Stärkederivate auf Maisstärke, Weizenstärke, Kartoffelstärke, Tapiokastärke, Maniokstärke, Erbsenstärke, Reisstärke, Amaranthstärke, Roggenstärke, Gerstenstärke bzw. deren natürlichen und transgenen Waxyformen bzw. deren natürlichen und transgenen Hochamyloseformen.

Prinzipiell ist Stärke ein pflanzliches Naturprodukt. Sie besteht im Wesentlichen aus einem Glucosepolymer, das in der Regel eine Zusammensetzung aus zwei Bestandteilen darstellt, nämlich Amylopektin und Amylose. Diese sind ihrerseits wieder keine einheitlichen Substanzen, sondern sind Gemische von Polymeren mit unterschiedlichen Molekulargewichten. Amylose besteht im Wesentlichen aus unverzweigten Polysacchariden, in denen die Glucose in alpha-1,4-Bindung vorliegt. Amylopektin ist dagegen ein stark verzweigtes Glucosepolymer, bei dem die Glucoseeinheiten neben den alpha-1,4-Bindungen an den Verzweigungsstellen in 1,6-Bindung enthalten sind.

Natürliche Stärken haben in der Regel einen Amylosegehalt von 15 bis 30 %. Es gibt aber auch Stärken des Waxytyps, welche einen erhöhten Amylopektingehalt aufweisen bzw. Amylo- Produkte, welche einen erhöhten Amylosegehalt enthalten. Neben den natürlichen bzw. gezüchteten natürlichen Waxytypen und Hochamylosetypen (natürliche Hybriden oder Mutanten) gibt es auch über chemische und/oder physikalische Fraktionierung gewonnene bzw. über gentechnisch veränderte Pflanzen hergestellte Waxystärken und Hochamylosestärken. All diese Stärken können prinzipiell als solche oder derivatisiert in Kombination mit hochviskosen Cellulosen als Verdicker in Dispersionsfarben eingesetzt werden.

Bevorzugterweise sind diese Stärken für den erfindungsgemäßen, kombinierten Einsatz mit hochviskosen Cellulosen als Verdicker in Dispersionsfarben modifiziert. Aus der Literatur ist eine Vielzahl von Derivaten bekannt, deren Herstellung u.a. in dem Werk "Starch: Chemistry and Technology", R.L. Whistler, Kapitel X und XVII, 1984, und in "Modified Starches: Properties and U-ses", herausgegeben von O.B. Wurzburg, Kapitel 2-6, und 9-11, CRC Press, 1986, gut zusammengefasst ist. Im Allgemeinen unterscheidet man bei Stärkederivaten zwischen Stärkeether und Stärkeester. Desweiteren kann auch zwischen nichtionischen, anionischen, kationischen und amphoteren als auch hydrophoben Stärkederivaten differenziert werden, welche über eine Slurry- Kleister-, Halbtrocken- oder Trockenderivatisierung, als auch einer Derivatisierung in organischen Lösungsmitteln, hergestellt werden können.

Vorzugsweise ist die erfindungsgemäß eingesetzte Stärke das Produkt einer Veresterung, alternativ hiezu ist die Stärke das Produkt einer Veretherung. Die nachfolgenden Derivatisierungsmöglichkeiten sind dabei Stand der Technik.

Unter anionischer und nichtionischer Modifizierung der Stärke, werden jene Derivate zusammengefasst, wo die freien Hydroxylgruppen der Stärke durch anionische oder nichtinonische Gruppierungen substituiert werden. Im Unterschied zur Mais- und Wachsmaisstärke haben die Kartoffel- und Amylopektin-Kartoffelstärken natürlich gebundene anionische Gruppen, so dass im eigentlichen Sinne hier bei den anionischen Stärkederivaten von einer zusätzlichen anionischen Modifizierung gesprochen werden muss. Es handelt sich dabei um natürlich chemisch gebundene Phosphatgruppen, die damit den Kartoffel- und Amylopektin-Kartoffelstärken eine zusätzliche spezifische Polyelektrolyteigenschaft verleihen.

Die anionische und nichtionische Derivatisierung lässt sich prinzipiell auf zwei Arten durchführen:
a) Die Modifizierung erfolgt dermaßen, dass es zu einer Veresterung der Stärke kommt. Als Modifizierungsmittel dienen anorganische oder organische verschiedenwertige, meist zweiwertige, Säuren bzw. Salze davon bzw. Ester davon bzw. Anhydride davon. So sind u.a. folgende Säuren, ihre Aufzählung ist nur beispielhaft, geeignet: o-Phosphorsäure, m-Phosphorsäure, Poly-Phosphorsäure, unterschiedlichste Schwefelsäuren, verschiedenste Kieselsäuren, die unterschiedlichsten Borsäuren, Essigsäure, Oxalsäure, Bernsteinsäure und ihre Derivate, Glutarsäure, Adipinsäure, Phthalsäure, Citronensäure, etc.. Auch gemischte Ester oder Anhydride können verwendet werden. Bei der Veresterung der Stärke kann diese auch mehrfach erfolgen, so dass beispielsweise Distärkephosphorsäureester hergestellt werden können. Vorzugsweise ist die erfindungsgemäß eingesetzte Stärke dabei das Produkt einer Veresterung mit Mono-, Di- oder Tricarbonsäuren mit einer Alkylkette mit 1 - 30 Kohlenstoffatomen oder ein Carbamat, besonders bevorzugt acyliert, wie succinyliert, octenylsuccinyliert, dodecylsuccinyliert oder acetyliert.
b) Die Modifizierung erfolgt dermaßen, dass es zu einer Veretherung der Stärke kommt. Als Modifizierungsmittel dienen anorganische oder organische substituierte Säuren bzw. Salze davon bzw. Ester davon. Besonders bevorzugt wird dabei, wenn die erfindungsgemäß eingesetzte Stärke eine Methyl-, Ethyl-, Hydroxyethyl-, Hydroxypropyl-, Hydroxybutyl-, Carboxymethyl-, Cyanoethyl-, Carbamoylethyletherstärke oder ein Gemisch derselben ist. Bei diesem Reaktionstyp kommt es zur Abspaltung des Substituenten unter Bildung einer Ethergruppe.

Die Stärke ist dadurch beispielsweise primär, oder zusätzlich mit Phosphat, Phosphonat, Sulfat, Sulfonat oder Carboxylgruppen substituiert. Dies wird beispielsweise durch Umsetzung der Kartoffelstärke mit Halogencarbonsäuren, Chlorhydroxyalkylsulfonaten oder Chlorhydroxyalkylphosphonaten erreicht.

Unter kationischer Modifizierung der Stärken werden jene Derivate zusammengefasst, wo durch Substitution eine positive Ladung in die Stärke eingebracht wird. Die Kationisierungsverfahren erfolgen mit Amino-, Imino-, Ammonium-, Sulfonium- oder Phosphoniumgruppen. Methoden zur Herstellung von kationisierten Stärken sind beispielsweise von D.B. Solareck: Cationic Starches, in dem Buch von O.B. Wurzburg (Hrsg.): Modified Starches: Properties and Uses, CRC Press Inc., Boca Raton, Florida (1986), S. 113 - 130, beschrieben. Solche kationischen Derivate enthalten bevorzugt stickstoffhaltige Gruppen, insbesondere primäre, sekundäre, tertiäre und quartäre Amine bzw. Sulfonium- und Phosphoniumgruppen, die über Ether- oder Esterbindungen gebunden sind. Bevorzugt ist der Einsatz von kationisierten Stärken, die elektropositiv geladene quaternäre Ammoniumgruppen enthalten.

Eine weitere Gruppe stellen die amphoteren Stärken dar. Diese enthalten sowohl anionische als auch kationische Gruppen, wodurch ihre Anwendungsmöglichkeiten sehr spezifisch sind. Meist handelt es sich um kationische Stärken, die entweder durch Phosphatgruppen oder durch Xanthate zusätzlich modifiziert werden. Eine Darstellung zur Herstellung solcher Produkte ist ebenfalls von D.B. Solareck: Cationic Starches, in dem Buch von O.B. Wurzburg (Hrsg.): Modified Starches: Properties and Uses, CRC Press Inc., Boca Raton, Florida (1986), S. 113-130, beschrieben.

Stärken können auch über Hydrophobierungsreagenzien modifiziert werden. Veretherte hydrophobe Stärken erhält man dabei, wenn die hydrophoben Reagenzien ein Halogenid, ein Epoxid, ein Halogenhydrin, ein Glycidyl, eine Carbonsäure oder eine quarternäre Ammoniumgruppe enthalten. Für veresterte hydrophobe Stärken enthält das hydrophobe Reagens zumeist ein Anhydrid. Bereits carboxymethylierte Stärken können über ein hydrophobes Reagens, welches eine Amingruppe enthält, hydrophobiert werden. Die angeführten Reaktionen können dabei auch unter Anwesenheit eines Tensides ablaufen. Eine Hydrophobierung der Stärke kann auch über eine Abmischung einer Stärke oder eines Stärkederivates mit Fettsäureester erfolgen. Die bei den angeführten Reaktionen erhaltenen hydrohoben Stärken sind ebenfalls für den Einsatz in Farbsystemen geeignet.

Von großer Bedeutung sind Ester und Ether der Stärken. Man unterscheidet zwischen einfachen Stärkeestern und gemischten Stärkeestern, wobei der (die) Substituent(en) des Esters verschiedenartig sein kann (können): im Esterrest RCOO- kann der Rest R ein Alkyl-, Aryl-, Alkenyl-, Alkaryl- oder Aralkylrest mit 1 bis 17 Kohlenstoffatomen, bevorzugt mit 1 bis 6 Kohlenstoffatomen, insbesondere mit ein oder zwei Kohlenstoffatomen, sein. Diese Produkte schließen die Derivate Acetat (hergestellt aus Vinylacetat oder Acetanhydrid), Propionat, Butyrat, Stearat, Phthalat, Succinat, Oleat, Maleinat, Fumarat und Benzoat ein.

Solche acylierte, konkret succinylierte, octenylsuccinylierte, dodecylsuccinylierte und acetylierte Stärken zeigen sehr hohe Verdickerleistungen in wässrigen Systemen, und sind somit auch für Farbsysteme bestens geeignet.

Veretherungen erfolgen großteils durch Umsetzung mit Alkylenoxiden, die 2 bis 6 Kohlenstoffatome, bevorzugt 2 bis 4 Kohlenstoffatome, enthalten, insbesondere durch Verwendung von Ethylen- und Propylenoxid. Es können aber auch Methyl-, Carboxymethyl-, Cyanethyl- und Carbamoylether hergestellt und verwendet werden. Besonders bevorzugt ist die erfindungsgemäß verwendete Stärke, eine carboxymethylierte Mais- oder Kartoffelstärke, vorzugsweise mit einem Substitutionsgrad der Carboxymethylierung von DS 0,01 - 1,0, bevorzugt von DS 0,2 - 0,5.

Weitere Produkte umfassen die Alkylhydroxyalkyl-, Alkylcarboxyalkyl-, Hydroxyalkyl-carboxymethyl- und Alkylhydroxy-alkylcarboxymethyl-Derivate.

Neben den Estern und Ethern bzw. zusätzlich zu dieser Derivatisierung kann die erfindungsgemäß verwendete Stärke auch in unterschiedlichem Ausmaß als solches oder zusätzlich vernetzt, oxidiert, thermochemisch abgebaut, dextriniert oder extrudiert sein.

Die Vernetzung erfolgt dabei vorzugsweise durch Umsetzung mit Epichlorhydrin, Adipinsäure, Phosphoroxychlorid oder Natriumtrimetaphosphat, weiters mit 1,3-Dichlor-2-propanol, gegebenenfalls im Gemisch mit (Poly)aminen, weiters mit Di-oder Polyepoxiden, Aldehyden oder aldehydfreisetzenden Reagenzien, wie beispielsweise N,N'-Dimethylol-N,N'-ethylenharnstoff und gemischten Anhydriden von Carbonsäuren mit di- oder tribasischen Säuren, wie beispielsweise ein gemischtes Anhydrid aus Acetanhydrid mit Adipinsäure. Letzteres bzw. zahlreiche Varianten davon können unter dem Begriff Vernetzung mit Adipinsäure zusammengefasst werden.

Besonders bevorzugt wird wenn die erfindungsgemäß verwendete Stärke als solches oder zusätzlich acetalvernetzt ist. Besonders geeignet ist die erfindungsgemäß verwendete Stärke dabei glyoxalvernetzt oder propionaldehydvernetzt, allgemein kann die Acetalvernetzung mit Acetaldehyd, Propionaldehyd, Butyraldehyd aber auch längerkettigen Aldehyden durchgeführt werden. Die acetalvernetzten Stärken können entweder in Kombination mit einer weiteren Derivatisierung (Veretherung oder Veresterung) oder auch ohne weitere Modifizierung hergestellt und eingesetzt werden.

Die für die Veresterungen, Veretherungen und Vernetzungen verwendeten Stärken können zudem über thermisch - physikalische Modifikationen getempert (im Slurry) oder inhibiert (Trocken- bzw. Halbtrockenreaktion) sein.

Spezielle, erfindungsgemäße Produkte können über eine Reaktion der Stärken und Stärkederivaten mit unterschiedlichsten Formen von Glycidether, Diglycidethern, Triglycidethern, Tetraglycidethern und Glycidestern erhalten werden. Die Reagenzien können dabei auch Phenyl-, Cyclohexan- Alkyl-, Propylenglycol- und andere chemische Gruppen enthalten. Beispielhaft können dabei Reagenzien, wie Butandioldiglycidether, Polyglyceroltriglycidether, o-Kresol-glycidether, Polypropylendiglykolglycidether tert. Butylphenylglycidether, Cyclohexandimethanol-digly-cidether, Glycerintriglycidether, Neopentylglycoldiglycidether, Pentaerythrittetraglycidether, Ethylhexylglycidether, Hexandiol-glycidether, Trimethylolpropantriglycidether, Perhydrobisphenoldiglycidether und Neodekansäureglycidester genannt werden. Die erwähnten Modifikationen können als solches, in Kombination bzw. in Kombination mit herkömmlichen Veresterungen, Veretherungen und physikalischen bzw. thermischen Behandlungen durchgeführt werden.

Kleister der vernetzten Stärken zeigen bei geringerer Vernetzung eine sehr rasch ansteigende Viskosität, die bei stärkerer Vernetzung jedoch wieder abfällt. Die Retrogradation ist aber in beiden Fällen sehr gering, weshalb sich vernetzte Stärken auch als sehr vorteilhaft für den Einsatz in Farben eignen.

Besonders geeignet sind dabei Kombinationen von epichlorhydrinvernetzten carboxymethylierten Stärken bzw. epichlorhydrinvernetzten, carboxymethylierten und hydroxypropylierten Stärken, wobei die Vernetzung im Slurry als auch im Kleister erfolgen kann. Aber auch nur propionaldehydvernetzte, sowie in Kombination mit oben genannten Versterungen und Veretherungen modifizierten Stärken zeigen hier besonders gute Verdickerleistungen im Farbsystem.

Gemäß einer bevorzugten Ausführungsform der vorliegenden Erfindung ist die erfindungsgemäß verwendete Stärke bzw. sind die Stärken pfropfpolymerisierte oder pfropfcopolymerisierte Stärke(n), wie beispielsweise mit Produkten aus der Gruppe der Polyvinylalkohole, Acrylamide, Acrylsäuren oder Monomere bzw. Polymere ausgehend von Erdölkohlenwasserstoffen. Dabei kann das Stärke-Pfropf-(Co)-Polymerisat bevorzugt als Emulsionspolymerisat vorliegen.

Wie bereits erwähnt können all die genannten Modifikationen der Stärke nicht nur durch Umsetzung nativer Stärke erzielt werden, auch abgebaute Formen können zum Einsatz kommen. Die Abbauvorgänge können auf mechanische, thermische, thermochemische oder enzymatische Weise erfolgen. Dadurch lässt sich die Stärke nicht nur strukturell verändern, die Stärkeprodukte können auch kaltwasserlöslich bzw. kaltwasserquellbar gemacht werden (z.B. Dextrinierung und Extrusion).

Gemäß einer bevorzugten Ausführungsform ist die erfindungsgemäß verwendete Stärke oder modifizierte Stärke kaltwasserlöslich. Speziell kaltwasserlösliche Stärke kann mit oder ohne Vorverkleisterung durch Walzentrocknung, Sprühtrocknung bzw. Sprühkochung (Spray Cooking), u.s.w. hergestellt werden. Zur optimalen Entfaltung der Eigenschaften der kaltwasserlöslichen Stärke bzw. Stärkederivate ist der Aufschlussgrad von großer Bedeutung. Die Stärke bzw. ihre Derivate zeigen beim Aufschluss und der nachfolgenden Verwendung keine Klumpenbildung, Staubentwicklung und Entmischungsneigung und sind somit bei der praktischen Anwendung eines geeigneten Trockenproduktes auf Kleisterbasis nach dem Einrühren in Wasser optimal verarbeitbar. Ein besonderes Verfahren stellt dabei die Extrusion dar. Hier bietet sich die Möglichkeit modifizierte Stärke durch physikalische Einflüsse unterschiedlich stark abzubauen und gleichzeitig zu einem kaltwasserlöslichen bzw. kaltwasserquellbaren Produkt umzusetzen. Darüber hinaus ist mit dieser Technologie auch die direkte chemische Derivatisierung von Stärken kostensparend durchführbar. Der Einsatz der Sprühtrocknungstechnologie (insbesondere die Spray-Cooking Technologie) ermöglicht die Herstellung von besonders hochviskosen Stärken bzw. Stärkederivaten, die als Verdicker für Farbsysteme sehr gut geeignet sind.

Damit die Verdickerwirkung in der Farbe gut entfaltet wird, ist eine gute Quellung der Stärke notwendig. Die Zugabe der Stärke bzw. der Stärkederivate kann in der Regel auf zwei verschiedene Arten erfolgen. Wird eine Kochstärke verwendet, so muss vor der Zugabe ein konzentrierter Stärkekleister hergestellt werden. Zu diesem Zweck wird die Stärke in Wasser eingerührt und dieser Stärke - Slurry zum Sieden erhitzt, abgekühlt und dann dem Farbsystem zugegeben. Erst durch die Hitze wird die Stärke verkleistert und somit in den wasserlöslichen Zustand gebracht. Alternativ dazu kann ein kaltwasserlösliches Derivat vorgelöst oder als solches pulver- bzw. schuppenförmig in das System eingebracht werden, wobei unter moderatem Rühren die Stärke klumpenfrei in Lösung tritt. Die zweite ist die bevorzugtere Variante, zumal diese beim Endverbraucher einen geringeren technischen Aufwand bedeutet.

Die vorliegende Erfindung betrifft weiters eine Dispersionfarbe enthaltend eine Dispersionsfarbverdickerkombination wie oben ausführlich beschrieben.

Die folgende Beispiele dienen zur Erläuterung der vorliegenden Erfindung, ohne dieselbe einzuschränken:

### BEISPIEL 1:

Die Cellulosen, Stärken bzw. deren Kombinationen wurden 1% i. TS in Deionat auf Summe 500 g in einem 1 1 Becher eingerührt, mit 1%iger NaOH ein pH Wert von > pH 9 eingestellt, 10 min bei 1500 Upm mit einem 80 mm (Durchmesser) Turbinenrührer gerührt und nach einer Quellzeit von 24 h bei 5 Upm und 25°C mittels Brookfield-Rotationsviskosimeter gemessen.

### 1.1. Vergleich 1

Stärke A (epichlorhydrinvernetzte Carboxymethylstärke (CMS) auf Basis Kartoffelstärke; DS (CMS) ~ 0,33)
Hochviskose HEC 103.000 (mit Viskosität 2% i. TS von 103.000 mPa.s)

**Tabelle 1: Vergleich wässrige Lösungen 1 % i. TS mit HEC**

| Verdicker | Verhältnis [% Masse] | Viskosität Brookfield, 5 Upm, 25°C, |
|---|---|---|
| Hochviskose HEC | 100 | 10.400 mPa.s |
| Hochviskose HEC / Stärke A | 90 / 10 | 10.920 mPa.s |
| Hochviskose HEC / Stärke A | 75 / 25 | 10.120 mPa.s |
| Hochviskose HEC / Stärke A | 60 / 40 | 8.080 mPa.s |
| Stärke A | 100 | 96 mPa.s |

Ergebnis: praktisch idente Viskosität bei Ersatz von 25% Stärke; annähernd kein Viskositätsverlust bei Anteilen bis 40%, überraschender Effekt auf Basis der geringen Viskosität der reinen Stärkelösung.

### 1.2. Vergleich 2

Stärke A (vernetzte CMS auf Basis KS)
Hochviskose MC 78.000 (mit Viskosität 2% i. TS von 77.600 mPa.s)

**Tabelle 2: Vergleich wässrige Lösungen 1 % i. TS mit MC**

| Verdicker | Verhältnis [% Masse] | Viskosität Brookfield, 5 Upm, 25°C, |
|---|---|---|
| Hochviskose MC | 100 | 4.712 mPa.s |
| Hochviskose MC / Stärke A | 90 / 10 | 12.320 mPa.s |
| Hochviskose MC / Stärke A | 75 / 25 | 16.560 mPa.s |
| Hochviskose MC / Stärke A | 60 / 40 | 10.320 mPa.s |
| Stärke A | 100 | 96 mPa.s |

Ergebnis: höhere Viskositäten bei Ersatz von 40 %. Überraschender Effekt auf Basis der geringen Viskosität der reinen Stärkelösung.

### BEISPIEL 2:

Einsatz von Stärke - Cellulose Kombinationen in Dispersionsfarben
Rezeptur der Innen-Dispersionsfarbe anhand von Beispielen:
   - Farbe I:: Dispersionsfarbe mit reiner Cellulose als Verdicker
   - Farbe II:: Dispersionsfarbe mit Stärke / Cellulose Einsatz im Verh. 50 / 50
   Zugabe der Stärke am Beginn der Rezeptur
   - Farbe III:: Dispersionsfarbe mit Stärke / Cellulose Einsatz im Verh. 50 / 50
   Zugabe der Stärke nach dem Bindemittel

**Tabelle 3: Ansatzrezepturen für Dispersionsfarben ohne bzw. mit Stärkezusatz**

| **Material** | **Beschreibung** | **Farbe I** | **Farbe II** | **Farbe III** |
|---|---|---|---|---|
| H₂O (Deionat) | Lösungsmittel | 257,5 | 257,5 | 257,5 |
| Cellulose | Verdicker | 3,4 | 1,7 | 1,7 |
| Stärke A | Verdicker | | 1,7 | - |
| NaOH 25%ig | Base | 0,4 | 0,4 | 0,4 |
| Coatex | Netzmittel | 2,3 | 2,3 | 2,3 |
| Agitan 285 | Entschäumer | 1,5 | 1,5 | 1,5 |
| Preventol D7 | Biozid | 1,1 | 1,1 | 1,1 |
| Kronos 2190 | Pigment | 75,0 | 75,0 | 75,0 |
| Finntalc M 30 SL | Füllstoff | 52,5 | 52,5 | 52,5 |
| Omyacarb 5-GU | Füllstoff | 93,8 | 93,8 | 93,8 |
| Omyacarb 2-GU | Füllstoff | 187,5 | 187,5 | 187,5 |
| Acronal LR 8961 | Bindemittel | 75 | 75 | 75 |
| Stärke A | Verdicker | - | - | 1,7 |
| Summe | | 750 g | 750 g | 750 g |

### Durchführung:

Das Deionat wird vorgelegt, die Cellulose (Farbe I) bzw. Cellulose Stärke Kombination (Farbe II) 5 min eingerührt und anschließend mit der Natronlauge eingedickt. Anschließend erfolgt die Einrührung des Netzmittels, des Entschäumers, des Biozids, der Pigmente und der Füllstoffe. Nach einer Dispergierphase von 20 min wird das Bindemittel eingebracht, gefolgt von einer Stärkegabe bei Farbe III. Nach einer Rührung über 10 min wird die Farbe gelagert und nach 24 Stunden eine Viskosität und ein pH Wert ermittelt.

### 2.1. Vergleich der Verdickerleistungen bei unterschiedlichen Einsatzverhältnissen von Cellulose / Stärke bzw. bei unterschiedlichem Zugabezeitpunkt der Stärke

In den folgenden hergestellten Dispersionsfarben wurde immer die gleiche Gesamtmenge an Verdicker (Cellulose, Stärke - Cellulose Kombination) eingesetzt. Die Verhältnisse wurden jedoch variiert.

Mit der oben angeführten Rezeptur (siehe Tabelle 3) wurden einerseits verschiedene mittelviskose Hydroxyethylcellulosen (HEC) in Dispersionsfarben eingesetzt (analog Farbrezeptur I) und die daraus resultierenden Viskositäten zusammengestellt. Die mittelviskosen HEC's wurden, wie in der Beschreibung erwähnt, über die Viskositätsermittlung von 2%igen Lösungen klassifiziert und als solches bezeichnet.

**Tabelle 4: Ergebnisse der Einrührung von mittelviskosen Cellulosen**

| Mittelviskose HEC | Farbvariante I Viskosität Stormer Viskosimeter Nach 24 h Lagerung bei 25°C |
|---|---|
| HEC 4.650 | 94,1 KU |
| HEC 16.500 | 100,2 KU |
| HEC 28.800 | 104,2 KU |
| HEC 49.000 | 108,1 KU |

In einem weiteren Schritt wurden Dispersionsfarben auf Basis unterschiedlicher Kombinationsverhältnisse einer hochviskosen HEC (HEC 103.000) mit Stärke hergestellt, wobei der Zusatz der Stärke einerseits zu Beginn (analog Farbvariante II), andererseits erst am Ende der Rezeptur (anaolg der Farbvariante III) mit den unten angeführten Stärkeanteilen erfolgte.

**Tabelle 5: Ergebnisse der Viskositäten der Cellulose / Stärke Kombinationen in Dispersionsfarben (Farbrezepturen II und III)**

| Stärkeanteil in der Kombination mit HEC 103.000 | Farbvariante II (frühe Zugabe der Stärke) | Farbvariante III (späte Zugabe der Stärke) |
|---|---|---|
| 60% Stärke | - | 95,3 KU |
| 50 % Stärke | 94,1 KU | 100,2 KU |
| 40 % Stärke | 97,7 KU | 104,5 KU |
| 30 % Stärke | 102,0 KU | 107,2 KU |
| 20 % Stärke | 106,3 KU | 108,7 KU |
| 15 % Stärke | 108,2 KU | - |

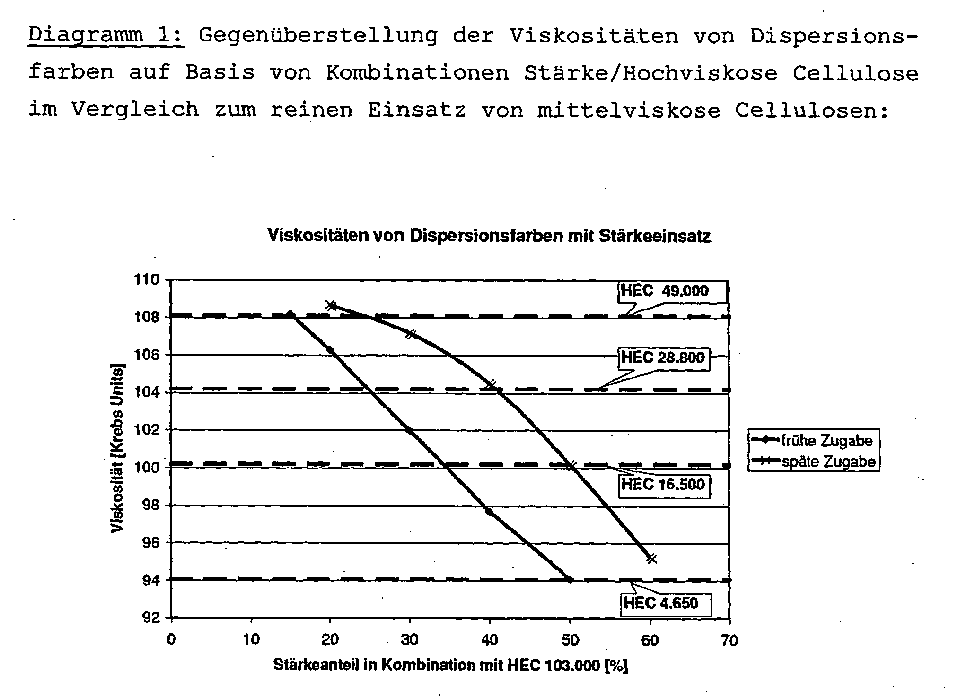

Das Diagramm zeigt, welche Anteile an Stärke man in Kombination mit einer hochviskosen HEC in ein Farbsystem einbringen kann, um auf Verdickungsleistungen der reinen mittelviskosen Cellulosen zu kommen.

Demnach kann man eine HEC 4.650 mit 50% Anteilen an Stärke an einer Farbverdickerkombination bei früher bzw. rund 60% bei später Zugabe ersetzen. Die HEC 16.500 kann man mit rund 65% hochviskose Cellulose und 35% Anteil an Stärke bei früher, und mit rund 50% hochviskose Cellulose und 50% Stärke bei später Zugabe substituieren. Eine HEC 28.800 Viskosität in der Farbe entspricht eine Kombination mit rund 25% bei früher und rund 40% bei später Zugabe der Stärke. Eine HEC 49.000 kann mit Anteilen an 15% Stärke bei früher, und rund 20% Stärke bei später Zugabe ersetzt werden.

### 2.2. Vergleich der Farbeigenschaften von mit HEC bzw. mit HEC / Stärke verdickten Dispersionsfarben

Mit der in Tabelle 3 beschriebenen Innen- Dispersionsfarbenrezeptur wurden drei verschiedene Farben hergestellt:
a) eine Farbe (Farbe IV) mit einer HEC 49.000 als Verdicker.
b) eine Farbe (Farbe V) mit einem kombiniertem Einsatz von einer hochviskosen HEC 103.000 mit einer Stärke (Typ Stärke A) in einem Verhältnis 74 / 26
c) als Vergleich dazu eine Farbe (Farbe VI) mit der reinen hochviskosen HEC 103.000, jedoch nur mit jenem Anteil, welcher auch in der Kombination verwendet wird (0,34 %)

**Tabelle 6: Gegenüberstellung von Innen - Dispersionsfarben inklusive anwendungstechnischen Prüfungen (Verlauf, Ablauf, Scheuerung, Rollprüfung)**

| Innen Dispersionsfarbe | Farbe IV HEC 103.000 / Stärke A 74/26 | Farbe V HEC 49.000 | Farbe VI HEC 103.000 |
|---|---|---|---|
| Teil - Einsatzmenge % | 0,34 / 0,11 | 0,45 | 0,34 |
| Gesamteinsatzmenge % | 0,45 | 0,45 | 0,34 |
| Brookfield [mPa.s];20 Upm | 8.800 | 8.300 | 5.700 |
| Stormer Viskosität [K U] | 108 | 108 | 92 |
| Verlauf (Leneta; ASTM D 4062-99) | 8 | 6 | 8 |
| Ablauf ASTM D4400-99 [mils] | 14 | 14 | 10 |
| Scheuerklasse (ISO 11998) | 3 | 3 | 3 |
| Rollprüfung* | +++ | ++ | ++ |

| | | | |
|---|---|---|---|
| * subjektive Bewertung des Abrollens der bedeckten Lammfellrolle sehr gut (+++), gut (++), akzeptabel (+), schlecht (-) | | | |

Wie aus der Tabelle 6 ersichtlich ist, werden mit dem kombinierten Einsatz von Stärke A / HEC durchaus die Eigenschaften der Farbe auf Basis der reinen mittelviskosen HEC 49.000 (Farbe V) erreicht. Zudem zeigen sich Verbesserungen im Verlauf (8 statt 6 mils) und im Rollverhalten. Ein Vergleich der Herstellung einer Farbe lediglich mit dem Anteil an HEC (Farbe VI), welcher in der Kombination (0,34% in Farbe IV) eingesetzt wird, erreicht nicht die gewünschten Viskositäten und zeigt auch schlechtere Werte im Ablauf bzw. ein zäheres Rollverhalten. Mit den auf der Farbverdickerkombination (Stärke - Cellulose) hergestellten Dispersionsfarben sind damit auch bessere Farbeigenschaften zu erzielen.

### 2.3. Vergleich der Farbeigenschaften von mit MC bzw. mit MC / Stärke verdickten Dispersionsfarben

Mit der unter Beispiel 2 beschriebenen Innen- Dispersionsfarbenrezeptur wurden zwei weitere Farben hergestellt:
a) eine Farbe (Farbe VII) mit einer Methylcellulose (MC) 22.500
b) eine Farbe (Farbe VIII) mit einem kombiniertem Einsatz von einer hochviskosen MC 78.000 mit einer Stärke (Typ Stärke B; epichlorhydrinvernetzte, carboxymethylierte Amylopektinkartoffelstärke; DS (CMS) - 0,33) in einem Verhältnis 60 / 40

**Tabelle 7: Gegenüberstellung von Innen - Dispersionsfarben inklusive anwendungstechnischen Prüfungen (Verlauf, Ablauf, Scheuerung, Rollprüfung)**

| Innen Dispersionsfarbe | Farbe VII MC 22.500 | Farbe VIII MC 78.000 / Stärke B 60/40 Späte Zugabe der Stärke |
|---|---|---|
| Teil - Einsatzmenge % | - | 0,27 / 0,18 |
| Gesamteinsatzmenge % | 0,45 | 0,45 |
| Brookfield [mPa.s]; 20 Upm | 8.160 | 8.460 |
| Stormer Viskosität [KU] | 106,6 | 106,2 |
| Verlauf (Leneta; ASTM D 4062-99) | 8 | 9 |
| Ablauf; ASTM D4400-99 [mils] | 14 | 14 |
| Scheuerklasse (ISO 11998) | 3 | 3 |
| Rollprüfung* | ++ | +++ |

| | | |
|---|---|---|
| * ... subjektive Bewertung des Abrollens der bedeckten Lammfellrolle sehr gut (+++), gut (++), akzeptabel (+), schlecht (-) | | |

Es ist aus der Tabelle 7 ersichtlich, dass mit dem kombinierten Einsatz von Stärke B / MC 78.000 generell die Eigenschaften der Farbe auf Basis der reinen mittelviskosen MC 22.500 (Farbe VII) erreicht werden. Es zeigen sich wieder Verbesserungen im Verlauf (9 statt 8) und im Rollverhalten. Mit den auf der Farbverdickerkombination (Stärke - Cellulose) hergestellten Dispersionsfarben sind damit wieder bessere Farbeigenschaften zu erzielten

### BEISPIEL 3:

### Einsatz von Stärke - Cellulose Kombinationen in Dispersionsfarben

Rezeptur einer weiteren Innen-Dispersionsfarbe anhand von Beispielen mit kaltwasserlöslicher octenyl-succinylierter Amylopektinkartoffelstärke (Stärke C) und kaltwasserlöslicher propionaldehydvernetzter herkömmlicher Kartoffelstärke (Stärke D),:
Farbe IX: Dispersionsfarbe mit reiner Cellulose 16.500 als Verdicker
Farbe X + XI: Dispersionsfarbe mit Stärke / Cellulose Einsatz Zugabe der Stärke nach dem Bindemittel

**Tabelle 8: Ansatzrezepturen für Dispersionsfarben ohne bzw. mit Stärkezusatz**

| **Material** | **Beschreibung** | **Farbe IX** | **Farbe X** | **Farbe XI** |
|---|---|---|---|---|
| H₂O (Deionat) | Lösungsmittel | 377,3 | 377,3 | 377,3 |
| Cellulose HEC 16.500 | Verdicker | 5,0 | - | - |
| Cellulose HEC 103.000 | Verdicker | - | 3,0 | 3,0 |
| NaOH 25%ig | Base | 0,2 | 0,2 | 0,2 |
| Coatex | Netzmittel | 3,5 | 3,5 | 3,5 |
| Agitan 285 | Entschäumer | 2 | 2 | 2 |
| Socal P2 | Füllstoff | 150 | 150 | 150 |
| Omyacarb 5-GU | Füllstoff | 400 | 400 | 400 |
| Mergal K15 | Biozid | 2 | 2 | 2 |
| Acronal LR 8961 | Bindemittel | 60 | 60 | 60 |
| Stärke C | Verdicker | - | 2 | - |
| Stärke D | Verdicker | - | - | 2 |
| Summe | | 1000 g | 1000 g | 1000 g |

### Durchführung:

Das Deionat wird vorgelegt, die Cellulose 5 min eingerührt und anschließend mit der Natronlauge eingedickt. Anschließend erfolgt die Einrührung des Netzmittels, des Entschäumers, der Füllstoffe und des Biozids. Nach einer Dispergierphase von 10 min wird das Bindemittel eingebracht, gefolgt von einer Stärkegabe bei Farbe X und XI. Nach einer Rührung über 10 min wird die Farbe gelagert und nach 24 Stunden eine Viskosität und ein pH Wert ermittelt, sowie weitere Farbuntersuchungen hinsichtlich der Farbqualität durchgeführt.

**Tabelle 9: Gegenüberstellung von Innen - Dispersionsfarben inklusive anwendungstechnischen Prüfungen (Verlauf, Ablauf, Scheuerung, Rollprüfung)**

| Innen-Dispersionsfarbe | Farbe IX HEC 16.500 | Farbe X HEC 103.000 / Stärke C 60/40 | Farbe XI HEC 103.000 / Stärke D 60/40 |
|---|---|---|---|
| Teil - Einsatzmenge % | - | 0,30 / 0,20 | 0,30 / 0,20 |
| Gesamteinsatzmenge % | 0,50 | 0,50 | 0,50 |
| Brookfield [mPa.s]; 20 Upm | 7.100 | 9.760 | 10.580 |
| Stormer Viskosität [KU] | 106,3 | 115,4 | 110,2 |
| Verlauf (Leneta; ASTM D 4062-99) | 4 | 4 | 4 |
| Ablauf ASTM D4400-99 [mils] | 12 | 14 | 14 |
| Rollprüfung* | ++ | +++ | +++ |

| | | | |
|---|---|---|---|
| * ... subjektive Bewertung des Abrollens der bedeckten Lammfellrolle sehr gut (+++), gut (++), akzeptabel (+), schlecht (-) | | | |

Mit den 60/40 HEC - Stärkeverdickerkombinationen sind sehr gute Verdickerleistungen im Vergleich zu reinen HEC 16.500 Farbe erzielbar. Die Farbeigenschaften unterscheiden sich kaum. Leichte Vorteile gegenüber der reinen HEC Farbe (Farbe IX) waren für die Farben X (Stärke C) und Farbe XI (Stärke D) hinsichtlich dem Ablauf und der Rolleigenschaften zu beobachten.

### BEISPIEL 4:

### Einsatz von Stärke - Cellulose Kombinationen in Außendispersionsfarben

Rezeptur einer Außendispersionsfarbe anhand von Beispielen mit Stärken (Stärke A und Stärke B):
Farbe XII: Dispersionsfarbe mit reiner Cellulose als Verdicker (HEC 28.800)
Farbe XIII + XIV: Dispersionsfarbe mit Stärke / Cellulose Einsatz
   Zugabe der Stärke nach dem Bindemittel

**Tabelle 10: Ansatzrezepturen für Dispersionsfarben ohne bzw. mit Stärkezusatz**

| **Material** | **Beschreibung** | **Farbe XII** | **Farbe XIII** | **Farbe XIV** |
|---|---|---|---|---|
| H₂O (Deionat) | Lösungsmittel | 160 | 160 | 160 |
| Cellulose HEC 28.800 | Verdicker | 3,4 | - | - |
| Cellulose HEC 103.000 | Verdicker | - | 2,0 | 2,0 |
| NaOH 25%ig | Base | 0,4 | 0,4 | 0,4 |
| Coatex | Netzmittel | 1,5 | 1,5 | 1,5 |
| Agitan 315 | Entschäumer | 1,5 | 1,5 | 1,5 |
| Preventol D6 | Biozid | 1,2 | 1,2 | 1,2 |
| Kronos 300 | Pigment | 75 | 75 | 75 |
| Finntalc M 20 SL | Füllstoff | 52 | 52 | 52 |
| Omyacarb 15-GU | Füllstoff | 117 | 117 | 117 |
| Omyacarb 5-GU | Füllstoff | 113 | 113 | 113 |
| Acronal S 559 | Bindemittel | 225 | 225 | 225 |
| Stärke A | Verdicker | - | 1,4 | - |
| Stärke B | Verdicker | - | - | 1,4 |
| Summe | | 750 g | 750 g | 750 g |

### Durchführung:

Das Deionat wird vorgelegt, die Cellulose 5 min eingerührt und anschließend mit der Natronlauge eingedickt. Anschließend erfolgt die Einrührung des Netzmittels, des Entschäumers, des Biozides, der Pigment und der Füllstoffe. Nach einer. Dispergierphase von 20 min wird das Bindemittel eingebracht, gefolgt von einer Stärkegabe bei Farbe XIII und XIV. Nach einer Rührung über 10 min wird die Farbe gelagert und nach 24 Stunden eine Viskosität und ein pH Wert ermittelt.

**Tabelle 11: Gegenüberstellung von Außen - Dispersionsfarben inklusive anwendungstechnischen Prüfungen (Verlauf, Ablauf, Scheuerung, Rollprüfung)**

| Außen-Dispersionsfarbe | Farbe XII HEC 28.800 | Farbe XIII HEC 103.000 / Stärke A 60/40 | Farbe XIV HEC 103.000 / Stärke B 60/40 |
|---|---|---|---|
| Teil - Einsatzmenge % | - | 0,27 / 0,18 | 0,27 / 0,18 |
| Gesamteinsatzmenge % | 0,45 | 0,45 | 0,45 |
| Brookfield [mPa.s]; 20 Upm | 6240 | 7340 | 7380 |
| Stormer Viskosität | 99,2 | 100,4 | 100,3 |
| Verlauf (Leneta; ASTM D 4062-99) | 5 | 5 | 6 |
| Ablauf ASTM D4400-99 [mils] | 10 | 12 | 10 |
| Scheuerklasse (ISO 11998) | 2 | 2 | 2 |
| Rollprüfung* | ++ | +++ | +++ |

| | | | |
|---|---|---|---|
| * ... subjektive Bewertung des Abrollens der bedeckten Lammfellrolle sehr gut (+++), gut (++), akzeptabel (+), schlecht (-) | | | |

Mit den 60/40 HEC - Stärkeverdickerkombinationen sind sehr gute Verdickerleistungen im Vergleich zu reinen HEC 28.800 Farbe erzielbar. Die Farbeigenschaften unterscheiden sich kaum. Leichte Vorteile gegenüber der reinen HEC Farbe (Farbe XII) waren für die Farbe XIII (Stärke A) hinsichtlich des Ablaufs, sowie für die Farbe XIV (Stärke B) hinsichtlich des Verlaufs bzw. bei beiden stärkehältigen Farben hinsichtlich der Rolleigenschaften zu beobachten.

### BEISPIEL 5:

Analog zu Beispiel 2 bzw. 2.1 erfolgten weitere Gegenüberstellungen von Innenfarben, einerseits hergestellt mit Cellulosen, konkret Methylcellulosen (MC) und Ethylcellulosen (EC) und andererseits hergestellt mit Cellulose (MC, EC) Stärkekombinationen. Rezeptur der Innen-Dispersionsfarbe analog den Beispielen Farbe I, Farbe II und Farbe III:

### 5.1. Vergleich der Verdickerleistungen bei unterschiedlichen Einsatzverhältnissen von Methylcellulose / Stärke bzw. bei unterschiedlichem Zugabezeitpunkt der Stärke

In den folgenden hergestellten Dispersionsfarben wurde immer die gleiche Gesamtmenge an Verdicker (Cellulose, Stärke - Cellulose Kombination) eingesetzt. Die Verhältnisse wurden jedoch variiert.

Mit der oben angeführten Rezeptur (siehe Tabelle 3) wurden einerseits verschiedene mittelviskose Methylhydroxyethylcellulosen (MC) in Dispersionsfarben eingesetzt (analog Farbrezeptur I) und die daraus resultierenden Viskositäten zusammengestellt. Die mittelviskosen MC's wurden, wie in der Beschreibung erwähnt, über die Viskositätsermittlung von 2%igen Lösungen klassifiziert und als solches bezeichnet.

**Tabelle 12: Ergebnisse der Einrührung von mittelviskosen Cellulosen**

| Mittelviskose MC | Farbvariante I Viskosität Stormer Viskosimeter Nach 24 h Lagerung bei 25°C |
|---|---|
| MC 4.000 | 92,0 KU |
| MC 10.000 | 99,0 KU |

In einem weiteren Schritt wurden Dispersionsfarben auf Basis unterschiedlicher Kombinationsverhältnisse einer hochviskosen MC (MC 138.000) mit Stärke hergestellt, wobei der Zusatz der Stärke einerseits zu Beginn (analog Farbvariante II), andererseits erst am Ende der Rezeptur (analog der Farbvariante III) mit den unten angeführten Stärkeanteilen erfolgte.

**Tabelle 13: Ergebnisse der Viskositäten der MC / Stärke A Kombinationen in Dispersionsfarben (Farbrezepturen II und III)**

| Stärkeanteil Stärke A in der Kombination mit MC 138.000 | Farbvariante II (frühe Zugabe der Stärke) | Farbvariante III (späte Zugabe der Stärke) |
|---|---|---|
| 60% Stärke | - | 98,8 KU |
| 50 % Stärke | 97,5 KU | 102,0 KU |
| 40 % Stärke | 104,3 KU | 106,0 KU |
| 30 % Stärke | 108,2 KU | 109,5 KU |
| 22 % Stärke | 111,0 KU | 112,0 KU |

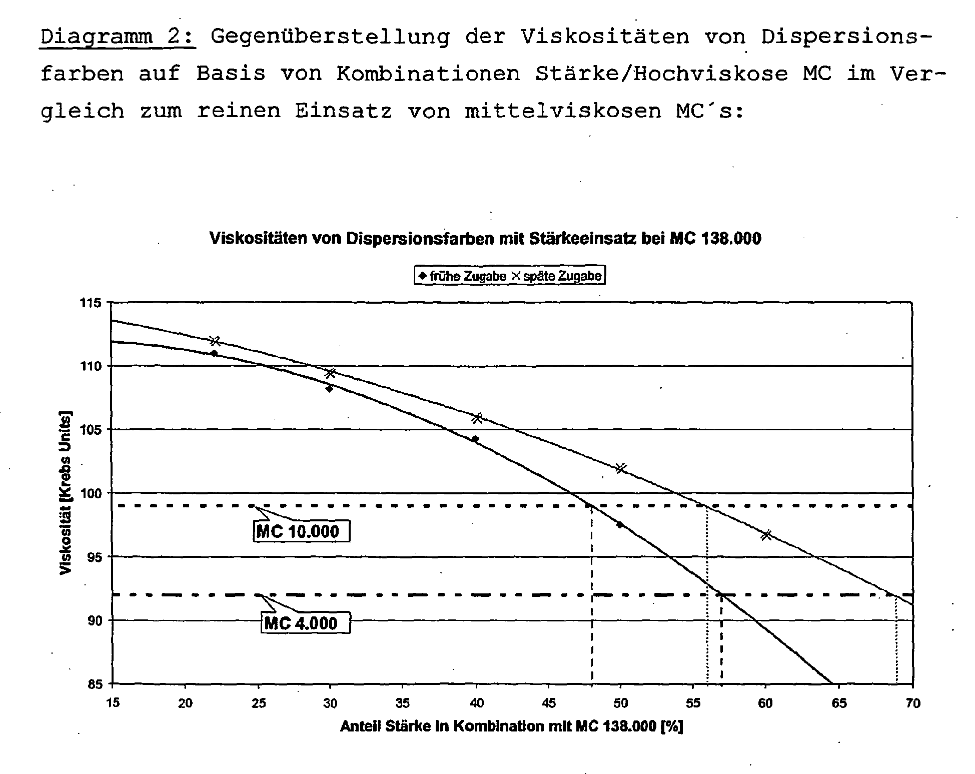

Das Diagramm zeigt, welche Anteile an Stärke man in Kombination mit einer hochviskosen MC 138.000 in ein Farbsystem einbringen kann, um auf Verdickungsleistungen der reinen mittelviskosen Methylcellulosen zu kommen.

Demnach kann man eine MC 4.000 mit 55% Anteilen an Stärke an einer Farbverdickerkombination bei früher bzw. rund 65% bei später Zugabe ersetzen. Die MC 10.000 kann man mit rund 55% hochviskose MC und 45% Anteil an Stärke bei früher, und mit rund 45% hochviskose MC und 55% Stärke bei später Zugabe substituieren.

### 5.2. Vergleich der Verdickerleistungen bei unterschiedlichen Einsatzverhältnissen von Ethylhydroxyethylcellulose / Stärke bzw. bei unterschiedlichem Zugabezeitpunkt der Stärke

In den folgenden hergestellten Dispersionsfarben wurde immer die gleiche Gesamtmenge an Verdicker (Cellulose, Stärke - Cellulose Kombination) eingesetzt. Die Verhältnisse wurden jedoch variiert.

Mit der oben angeführten Rezeptur (siehe Tabelle 3) wurden einerseits verschiedene mittelviskose Ethylhydroxyethylcellulosen (EC) in Dispersionsfarben eingesetzt (analog Farbrezeptur I) und die daraus resultierenden Viskositäten zusammengestellt. Die mittelviskosen EC's wurden, wie in der Beschreibung erwähnt, über die Viskositätsermittlung von 2%igen Lösungen klassifiziert und als solches bezeichnet.

**Tabelle 14: Ergebnisse der Einrührung von mittelviskosen Cellulosen**

| Mittelviskose EC | Farbvariante I Viskosität Stormer Viskosimeter nach 24 h Lagerung bei 25°C |
|---|---|
| EC 4.700 | 89,7 KU |
| EC 22.600 | 102,2 KU |

In einem weiteren Schritt wurden Dispersionsfarben auf Basis unterschiedlicher Kombinationsverhältnisse einer hochviskosen EC (EC 75.000) mit Stärke hergestellt, wobei der Zusatz der Stärke einerseits zu Beginn (analog Farbvariante II), andererseits erst am Ende der Rezeptur (analog der Farbvariante III) mit den unten angeführten Stärkeanteilen erfolgte.

**Tabelle 15: Ergebnisse der Viskositäten der EC / Stärke A Kombinationen in Dispersionsfarben (Farbrezepturen II und III)**

| Stärkeanteil Stärke A in der Kombination mit EC 75.000 | Farbvariante II (frühe Zugabe der Stärke) | Farbvariante III (späte Zugabe der Stärke) |
|---|---|---|
| 60% Stärke | 85,7 KU | - |
| 50 % Stärke | 90,4 KU | 95,1 KU |
| 40 % Stärke | 95,7 KU | 100,4 KU |
| 30 % Stärke | 99,1 KU | 103,7 KU |

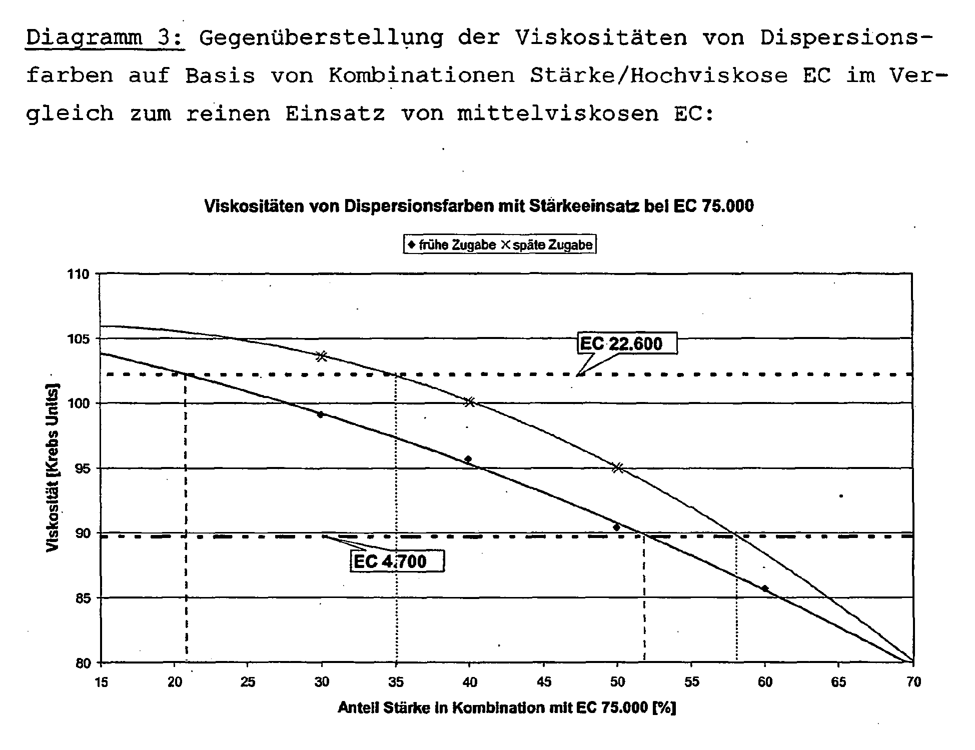

Das Diagramm zeigt, welche Anteile an Stärke man in Kombination mit einer hochviskosen EC 75.000 in ein Farbsystem einbringen kann, um auf Verdickungsleistungen der reinen mittelviskosen Ethylhydroxyethylcellulosen zu kommen.

Demnach kann man eine EC 4.700 mit 50% Anteilen an Stärke an einer Farbverdickerkombination bei früher bzw. rund 55% bei später Zugabe ersetzen. Die EC 22.600 kann man mit rund 80% hochviskose EC und 20% Anteil an Stärke bei früher, und mit rund 65% hochviskose EC und 35% Stärke bei später Zugabe substituieren.

### BEISPIEL 6:

### Einsatz von Stärke - Cellulose Kombinationen in Dispersionsfarben

Rezeptur einer weiteren Innen-Dispersionsfarbe anhand von Beispielen mit einer epichlorhydrinvernetzten Carboxymethylmaisstärke (Stärke E), einer Carboxymethylkartoffelstärke (F), einer propoxylierten Kartoffelstärke (G) und einer vernetzten, propoxylierten Kartoffelstärke (H):
Farbe XV: Dispersionsfarbe mit reiner HEC 4.650 als Verdicker
Farbe XVI + XVII+ XVIII + XIX:
   Dispersionsfarbe mit Stärke / Cellulose Einsatz Zugabe der Stärke kurz nach der Cellulose

**Tabelle 16: Ansatzrezepturen für Dispersionsfarben ohne bzw. mit Stärkezusatz**

| | | **Farbe** | | | | |
|---|---|---|---|---|---|---|
| **Material** | **Beschreibung** | **XV** | **XVI** | **XVII** | **XVIII** | **XIX** |
| H₂O (Deionat) | Lösungsmittel | 343,5 | 343,5 | 343,5 | 343,5 | 343,5 |
| Cellulose HEC 4.650 | Verdicker | 4,5 | - | - | - | - |
| Cellulose HEC 103.000 | Verdicker | - | 2,7 | 2,7 | 2,7 | 2,7 |
| Stärke E | Verdicker | - | 1,8 | - | - | - |
| Stärke F | Verdicker | - | - | 1,8 | - | - |
| Stärke G | Verdicker | - | - | - | 1,8 | |
| Stärke H | Verdicker | - | - | - | - | 1,8 |
| NaOH 25%ig | Base | 0,5 | 0,5 | 0,5 | 0,5 | 0,5 |
| Coatex | Netzmittel | 3,0 | 3,0 | 3,0 | 3,0 | 3,0 |
| Agitan 285 | Entschäumer | 2,0 | 2,0 | 2,0 | 2,0 | 2,0 |
| Kronos 2190 | Pigment | 100 | 100 | 100 | 100 | 100 |
| Finntalc M 30 SL | Füllstoff | 70 | 70 | 70 | 70 | 70 |
| Omyacarb 5-GU | Füllstoff | 125 | 125 | 125 | 125 | 125 |
| Omyacarb 2-GU | Füllstoff | 250 | 250 | 250 | 250 | 250 |
| Mergal K15 | Biozid | 1,5 | 1,5 | 1,5 | 1,5 | 1,5 |
| Acronal LR 8961 | Bindemittel | 100 | 100 | 100 | 100 | 100 |
| Summe | | 1000g | 1000g | 1000g | 1000g | 1000g |

### Durchführung:

Das Deionat wird vorgelegt, die Cellulose 5 min eingerührt, bei XVI bis XIX die Stärke eingerührt und anschließend mit der Natronlauge eingedickt. Anschließend erfolgt die Einrührung des Netzmittels, des Entschäumers, der Pigmente, der Füllstoffe und des Biozids. Nach einer Dispergierphase von 5 min wird das Bindemittel eingebracht und danach nochmals 3 min gerührt. Anschließend erfolgt eine Lagerung über 24 Stunden, gefolgt von einer Viskositätsmessung, pH Wert Ermittlung und weiteren Farbuntersuchung hinsichtlich weiterer Qualitätskriterien.

**Tabelle 17: Gegenüberstellung von Innen - Dispersionsfarben inklusive anwendungstechnischen Prüfungen (Verlauf, Ablauf, Rollprüfung)**

| Innendispersionsfarbe | XV HEC | XVI Stärke | XVII Stärke | XVIII Stärke | XIX Stärke |
|---|---|---|---|---|---|
| | 4.650 | E | F | G | H |
| Teil - Einsatzmenge % HEC 103.000 /Stärke | - | 2,8/1,7 | 2,8/1,7 | 2,8/1,7 | 2,8/1,7 |
| Gesamteinsatzmenge % | 4,5 | 4,5 | 4,5 | 4,5 | 4,5 |
| Brookfield [mPa.s]; 20 Upm | 5450 | 6850 | 6400 | 6200 | 7300 |
| Stormer Viskosität [KU] | 98,5 | 100,0 | 98,2 | 96,2 | 99,4 |
| pH Wert | 9,0 | 9,1 | 9,0 | 9,0 | 9,0 |
| Verlauf (Leneta; ASTM D 4062-99) | 8 | 9 | 8 | 9 | 9 |
| Ablauf ASTM D4400-99 [mils] | 12 | 14 | 12 | 12 | 12 |
| Rollprüfung* | ++ | +++ | +++ | ++ | ++ |

| | | | | | |
|---|---|---|---|---|---|
| * ... subjektive Bewertung des Abrollens der bedeckten Lammfellrolle sehr gut (+++), gut (++), akzeptabel (+), schlecht (-) | | | | | |

Mit den 60/40 HEC - Stärkeverdickerkombinationen sind sehr gute Verdickerleistungen im Vergleich zu reinen HEC 4.650 Farbe erzielbar. Die Farbeigenschaften unterscheiden sich kaum. Leichte Vorteile gegenüber der reinen HEC Farbe (Farbe XV) waren für die Farben XVI und XVII in der Rollprüfung, sowie bei XVI auch beim Ablauf und Verlauf gegeben. Die Stärkefarben XVIII und XIX zeigten hingegen Vorteile beim Verlauf, im Vergleich zur reinen HEC Farbe.

### BEISPIEL 7:

### Einsatz von Stärke - Cellulose Kombinationen in Dispersionsfarben

Rezeptur einer weiteren Innen-Dispersionsfarbe anhand von Beispielen mit einer kaltwasserlöslichen, acetylierten Kartoffelstärke (Stärke I), einer kaltwasserlöslichen octenylsuccinylierten Kartoffelstärke (Stärke J) und einer kaltwasserlöslichen Kartoffelstärke (K):
Farbe XX: Dispersionsfarbe mit reinen HEC 28.800 als Verdicker
Farbe XXI + XXII+ XXIII:
   Dispersionsfarbe mit Stärke / Cellulose Einsatz Zugabe der Stärke kurz nach der Cellulose

**Tabelle 18: Ansatzrezepturen für Dispersionsfarben ohne bzw. mit Stärkezusatz**

| | | **Farbe** | | | |
|---|---|---|---|---|---|
| **Material** | **Beschreibung** | **XX** | **XXI** | **XXII** | **XXIII** |
| H₂O (Deionat) | Lösungsmittel | 343,5 | 343,5 | 343,5 | 343,5 |
| Cellulose HEC 28.800 | Verdicker | 4,5 | - | - | - |
| Cellulose HEC 103.000 | Verdicker | - | 2,25 | 2,25 | 2,25 |
| Stärke I | Verdicker | - | 2,25 | - | - |
| Stärke J | Verdicker | - | - | 2,25 | - |
| Stärke K | Verdicker | - | - | - | 2,25 |
| NaOH 25%ig | Base | 0,5 | 0,5 | 0,5 | 0,5 |
| Coatex | Netzmittel | 3,0 | 3,0 | 3,0 | 3,0 |
| Agitan 285 | Entschäumer | 2,0 | 2,0 | 2,0 | 2,0 |
| Kronos 2190 | Pigment | 100 | 100 | 100 | 100 |
| Finntalc M 30 SL | Füllstoff | 70 | 70 | 70 | 70 |
| Omyacarb 5-GU | Füllstoff | 125 | 125 | 125 | 125 |
| Omyacarb 2-GU | Füllstoff | 250 | 250 | 250 | 250 |
| Mergal K15 | Biozid | 1,5 | 1,5 | 1,5 | 1,5 |
| Acronal LR 8961 | Bindemittel | 100 | 100 | 100 | 100 |
| Summe | | 1000g | 1000g | 1000g | 1000g |

### Durchführung:

Das Deionat wird vorgelegt, die Cellulose 5 min eingerührt, bei XXI, XXII u. XXIII die Stärke eingerührt und anschließend mit der Natronlauge eingedickt. Anschließend erfolgt die Einrührung des Netzmittels, des Entschäumers, der Pigmente, der Füllstoffe und des Biozids. Nach einer Dispergierphase von 5 min wird das Bindemittel eingebracht und danach nochmals 3 min gerührt. Anschließend erfolgt eine Lagerung über 24 Stunden, gefolgt von einer Viskositätsmessung, pH Wert Ermittlung und weiteren Farbuntersuchung hinsichtlich weiterer Qualitätskriterien.

**Tabelle 19: Gegenüberstellung von Innen - Dispersionsfarben inklusive anwendungstechnischen Prüfungen (Verlauf, Ablauf, Scheuerklasse u. Rollprüfung)**

| Innendispersionsfarbe | XX HEC 28.800 | XXI Stärke I | XXII Stärke J | XXIII Stärke K |
|---|---|---|---|---|
| Teil - Einsatzmenge % HEC 103.000 /Stärke | - | 2,25/2,25 | 2,25/2,25 | 2,25/2,25 |
| Gesamteinsatzmenge % | 4,5 | 4,5 | 4,5 | 4,5 |
| Brookfield [mPa.s]; 20 Upm | 7450 | 7250 | 8350 | 9800 |
| Stormer Viskosität [KU] | 104,6 | 100,9 | 104,2 | 102,7 |
| pH Wert | 9,0 | 8,9 | 9,0 | 9,0 |
| Verlauf (Leneta; ASTM D 4062-99) | 9 | 9 | 9 | 9 |
| Ablauf ASTM D4400-99 [mils] | 8 | 10 | 10 | 10 |
| Scheuerklasse (ISO 11998) | 3 | 3 | 3 | 3 |
| Rollprüfung* | ++ | +++ | +++ | +++ |

| | | | | |
|---|---|---|---|---|
| * ... subjektive Bewertung des Abrollens der bedeckten Lammfellrolle sehr gut (+++), gut (++), akzeptabel (+), schlecht (-) | | | | |

Mit den 50/50 HEC - Stärkeverdickerkombinationen sind sehr gute Verdickerleistungen im Vergleich zu reinen HEC 28.800 Farbe erzielbar. Die Farbeigenschaften unterscheiden sich kaum. Eine willkommene Verbesserung gegenüber der reinen HEC Farbe (Farbe XX) wurde mit den Stärkefarben wieder hinsichtlich dem Ablaufverhalten und dem Rollverhalten erzielt.

### BEISPIEL 8:

Einsatz von Stärke - Cellulose Kombinationen in Wasserglas /Dispersionsbindemittel basierten Farben Rezeptur einer Innen-Dispersion-Silikatfarbe anhand von Beispielen mit der Stärke A (epichlorhydrinvernetzte CM Kartoffelstärke) :
Farbe XXIV: Dispersions-Silikatfarbe mit reiner Hydroxyethylcellulose (HEC 12.000)
Farbe XXV: Dispersionsfarbe mit Stärke / Cellulose Einsatz
   Zugabe der Stärke (Stärke A) kurz nach der Cellulose

**Tabelle 20: Ansatzrezepturen für die Dispersions - Silikatfarben ohne bzw. mit Stärkezusatz**

| **Material** | **Beschreibung** | **Farbe XXIV** | **Farbe XXV** |
|---|---|---|---|
| H₂O (Deionat) | Lösungsmittel | 320,2 | 320,2 |
| Cellulose HEC 12.000 | Verdicker | 2,0 | - |
| Cellulose HEC 60.000 | Verdicker | - | 1,0 |
| Stärke A | Verdicker | - | 1,0 |
| Betolin V30 | Xanthan | 0,8 | 0,8 |
| Sapetin D27 | Netzmittel | 3,0 | 3,0 |
| Betolin Quart 25 | Stabilisator | 4,0 | 4,0 |
| Kronos 2190 | Pigment | 65 | 65 |
| Agitan 280 | Entschäumer | 2 | 2 |
| Omyacarb 5-GU | Füllstoff | 200 | 200 |
| Omyacarb 2-GU | Füllstoff | 100 | 100 |
| Finntalc M30SL | Füllstoff | 65 | 65 |
| Acronal S559 | Bindemittel | 70 | 70 |
| Betolin P35 | Wasserglas | 160 | 160 |
| Betolin A11 | Viskositäts Stabilisator | 8 | 8 |
| Summe | | 1000g | 1000g |

### Durchführung:

Das Deionat wird vorgelegt, die Cellulose 5 min eingerührt, bzw. bei XXV auch die Stärke eingerührt, gefolgt von der Zugabe des Betolin V30. Anschließend wird das Sapetin D27 und das Quart 25 zugegeben und der Ansatz homogenisiert. Darauf folgt die Zugabe von Kronos 2190, des Entschäumers und der Füllstoffe. Nach einer kurzen Dispergierphase (5 min) wird das Dispersionsbindemittel, das Wasserglas und der Viskositätsstabilisator zugegeben und 5 min homogenisiert. Anschließend erfolgt eine Lagerung über 24 Stunden, gefolgt von einer Viskositätsmessung, pH Wert Ermittlung und weiteren Viskositätsmessungen nach Lagerung bei 50°C, sowie einer Rollprüfung.

**Tabelle 21: Gegenüberstellung von Innen - Dispersions- Silikatfarben, Viskositätsentwicklung über einen Monat bei RT bzw. 50°C**

| Innen-Dispersion- Silikatfarbe | Farbe XXIV HEC 12.000 | | Farbe XXV HEC 60.000 / Stärke A 50/50 | |
|---|---|---|---|---|
| Brookfield [mPa.s]; 20 Upm 24h | 3.000 | | 2.950 | |
| Rollprüfung* | ++ | | +++ | |
| Lagerung | RT | 50°C | RT | 50°C |
| Brookfield [mPa.s]; 20 Upm; 14 d | 4.800 | 8.750 | 4.950 | 8.700 |
| Brookfield [mPa.s]; 20 Upm; 28 d | 8.650 | 9.350 | 9.300 | 9.150 |
| pH | 11,2 | | 11,2 | |

| | | | | |
|---|---|---|---|---|
| * ... subjektive Bewertung des Abrollens der bedeckten Lammfellrolle sehr gut (+++), gut (++), akzeptabel (+), schlecht (-) | | | | |

Die mit reiner HEC 12.000, als auch der HEC 60.000 - Stärke A - Kombination verdickte Farbe, zeigen sehr ähnliche Viskositäten bzw. Viskositätsentwicklungen bei längerer Lagerung. In dieser Kombination können 50% Stärke eingebracht werden, ohne Viskositätsverluste zu erleiden.

### BEISPIEL 9:

### Einsatz von Stärke - Cellulose Kombinationen in Wasserglas - Dispersionsbindemittel basiertem Reibeputz

Rezeptur eines Silikat - Reibeputzes anhand von Beispielen mit der Stärke A (epichlorhydrinvernetzte CM Kartoffelstärke):
Putz XXVI: Silikat - Reibeputz mit reiner
   Hydroxyethylcellulose (HEC 12.000)
Putz XXVII: Silikat - Reibeputz mit Stärke / Cellulose Einsatz
   Zugabe der Stärke (Stärke A) kurz nach der Cellulose

**Tabelle 22: Ansatzrezepturen für die Silikat - Reibeputze ohne bzw. mit Stärkezusatz**

| **Material** | **Beschreibung** | **Putz XXVI** | **Putz XXVII** |
|---|---|---|---|
| H₂O (Deionat) | Lösungsmittel | 104,2 | 104,2 |
| Cellulose HEC 12.000 | Verdicker | 2,0 | - |
| Cellulose HEC 60.000 | Verdicker | - | 1,0 |
| Stärke A | Verdicker | - | 1,0 |
| Betolin V30 | Xanthan | 0,8 | 0,8 |
| Sapetin D27 | Netzmittel | 3,0 | 3,0 |
| Betolin Quart 25 | Stabilisator | 2,0 | 2,0 |
| Kronos 2190 | Pigment | 30 | 30 |
| Agitan 280 | Entschäumer | 2 | 2 |
| Carolith 0-0,2 mm | Granulat | 210 | 210 |
| Carolith 0,2-0,5 mm | Granulat | 180 | 180 |
| Carolith 0,5-1 mm | Granulat | 110 | 110 |
| Carolith 1,5-2 mm | Granulat | 50 | 50 |
| Carolith 2,5-3 mm | Granulat | 70 | 70 |
| Finntalc M30SL | Füllstoff | 65 | 65 |
| Acronal S559 | Bindemittel | 85 | 85 |
| Betolin P35 | Wasserglas | 70 | 70 |
| Betolin A11 | Viskositäts Stabilisator | 8 | 8 |
| Betolin AH 250 | Hydrophobierer | 8 | 8 |
| Summe | | 1000g | 1000g |

### Durchführung:

Das Deionat wird vorgelegt, die Cellulose 5 min eingerührt, bzw. bei XXVII auch die Stärke eingerührt, gefolgt von der Zugabe des Betolin V30. Anschließend wird das Sapetin D27 zugegeben und der Ansatz homogenisiert. Darauf folgt die Zugabe von Kronos 2190 und Quart 25 und ein weiterer Rührschritt über 5 min. Nach der Zugabe des Entschäumers, der Füllstoffe und der zwei feineren Granulate wird der Ansatz wieder homogenisiert. Darauf folgt die Zugabe des halben Dispersionsbindemittels, des Wasserglases und des Viskositätsstabilisators. Nach einer kurzen Dispergierphase werden dann die restlichen Granulate, die zweite Teilmenge der Dispersion sowie das Hydrophobiermittel zugegeben. Es folgt eine Sofortmessung der Viskosität, des Ausbreitmaßes und eine Bewertung des Aufziehverhaltens.

**Tabelle 23: Gegenüberstellung von Reibe - Silikatputzen, Viskositäten, Ausbreitmaß, Aufziehverhalten und pH Werte**

| Reibe - Silikatputz | Putz XXVI HEC 12.000 | Putz XXVII HEC 60.000 / Stärke A 50/50 |
|---|---|---|
| Brookfield [mPa.s]; 20 Upm sofort | 50.000 | 50.000 |
| Ausbreitmaß [cm] sofort | 20,3 | 20,9 |
| Aufziehverhalten* | ++ | +++ |
| Brookfield [mPa.s]; 20 Upm 24h | 70.000 | 75.000 |
| Ausbreitmaß [cm] 24h | 20,2 | 20,3 |
| pH | 11,2 | 11,2 |

| | | |
|---|---|---|
| * ... subjektive Bewertung des Aufziehverhaltens sehr gut (+++), gut (++), akzeptabel (+), schlecht (-) | | |

Die mit reiner HEC 10.000, als auch der HEC 60.000 - Stärke A - Kombination verdickten Reibe-Putze, zeigen sehr ähnliche Viskositäten, Werte des Ausbreitmaßes. Das Aufziehverhalten des Stärkeputzes konnte mit der Stärke verbessert werden.

### BEISPIEL 10:

### Einsatz von Stärke - Cellulose Kombinationen in einem Kunstharzputz 1,5 - 2 mm

Rezeptur eines dispersionsbindemittelbasierten Kunstharzputz anhand von Beispielen mit der Stärke A (epichlorhydrinvernetzte CM Kartoffelstärke):
Putz XXVIII: Kunstharzputz mit reiner
   Hydroxyethylcellulose (HEC 12.000)
Putz XXIX: Kunstharzputz mit Stärke / Cellulose
   Einsatz
   Zugabe der Stärke (Stärke A) kurz nach der Cellulose

**Tabelle 24: Ansatzrezepturen für die Kunstharzputze ohne bzw. mit Stärkezusatz**

| **Material** | **Beschreibung** | **Putz XXVIII** | **Putz XXIX** |
|---|---|---|---|
| H₂O (Deionat) | Lösungsmittel | 63,3 | 63,3 |
| Cellulose HEC 12.000 | Verdicker | 1 | - |
| Cellulose HEC 60.000 | Verdicker | - | 0,5 |
| Stärke A | Verdicker | - | 0,5 |
| NaOH (25%ig) | Base | 3 | 3,0 |
| Sapetin D25 | Netzmittel | 1 | 1 |
| Kronos 2190 | Pigment | 20 | 20 |
| Finntalc M30SL | Füllstoff | 60 | 60 |
| Omyacarb 10GU | Füllstoff | 220 | 220 |
| Nopco 8034 | Entschäumer | 1,7 | 1,7 |
| Mergal K15 | Konservierung | 1,0 | 1,0 |
| Carolith 0-0,2 mm | Granulat | 80 | 80 |
| Carolith 1-1,5 mm | Granulat | 186 | 186 |
| Carolith 1,5-2 mm | Granulat | 263 | 263 |
| | | | |
| Acronal S559 | Bindemittel | 100 | 100 |
| Summe | | 1000g | 1000g |

### Durchführung:

Das Deionat wird vorgelegt, die Cellulose 5 min eingerührt, bei XXIX die Stärke eingerührt und anschließend mit der Natronlauge eingedickt. Anschließend erfolgt die Einrührung des Netzmittels, des Entschäumers, der Pigmente, der Füllstoffe, des Biozids und der Hälfte des Bindemittels. Nach einer Dispergierphase von 5 min werden die Granulate und das restliche Bindemittel eingebracht und danach nochmals 3 min gerührt. Es folgt eine Sofortmessung der Viskosität, des Ausbreitmaßes und eine Bewertung des Aufziehverhaltens, sowie Messungen der Viskosität und des Ausbreitmaßes nach 24 h.

**Tabelle 25: Gegenüberstellung von Kunstharzputzen, Viskositäten, Ausbreitmaß, Aufziehverhalten und pH Werte**

| Dispersionsgebundener-Kunstharzputz | Putz XXVIII HEC 12.000 | Putz XXIX HEC 60.000 / Stärke A 50/50 |
|---|---|---|
| Brookfield [mPa.s]; 20 Upm sofort | 130.000 | 140.000 |
| Ausbreitmaß [cm] sofort | 17,0 | 16,9 |
| Aufziehverhalten* | + | ++ |
| Brookfield [mPa.s]; 20 Upm 24h | 200.000 | 220.000 |
| Ausbreitmaß [cm] 24h | 17,1 | 16,9 |
| pH | 9,0 | 9,0 |

| | | |
|---|---|---|
| * ... subjektive Bewertung des Aufziehverhaltens sehr gut (+++), gut (++), akzeptabel (+), schlecht (-) | | |

Die mit reiner HEC 12.000, als auch mit der HEC 60.000 - Stärke A - Kombination verdickten Reibeputze, zeigen sehr ähnliche Viskositäten und Werte des Ausbreitmaßes. In dieser Kombination können 50% Stärke eingebracht werden, ohne Viskositätsverluste zu erleiden. Der Putz mit der Stärkezugabe zeigt wieder ein sehr gutes Aufziehverhalten.

## Patentansprüche

1. Kombinierte Verwendung von Stärke(n) bzw. Stärkederivaten zusammen mit mindestens einer hochviskosen Cellulose als Verdicker in dispersionsbindemittelbasierenden Farbsystemen, wobei die Cellulose eine Viskosität > 50.000 mPa.s, vorzugsweise > 60.000 mPa.s, insbesondere > 75.000 mPa.s aufweist, gemessen mittels Brookfield - Rotationsviskosimeter als 2%ige gequollene wässrige Lösung bei 5 Upm und 25°C.

2. Verfahren zur Herstellung von dispersionsbindemittelbasierenden Farbsystemen, **dadurch gekennzeichnet, dass** dem Farbsystem eine Kombination von Stärke(n) zusammen mit mindestens einer hochviskosen Cellulose als Verdicker zugesetzt wird, wobei die Cellulose eine Viskosität > 50.000 mPa.s, vorzugsweise > 60.000 mPa.s, insbesondere > 75.000 mPa.s aufweist, gemessen mittels Brookfield - Rotationsviskosimeter als 2%ige gequollene wässrige Lösung bei 5 Upm und 25°C.

3. Verfahren zur Herstellung von dispersionsbindemittelbasierenden Farbsystemen, **dadurch gekennzeichnet, dass** dem Farbsystem Stärke(n) und mindestens eine hochviskose Cellulose getrennt zu unterschiedlichen Zeitpunkten als Verdicker zugemischt werden, wobei die Cellulose eine Viskosität > 50.000 mPa.s, vorzugsweise > 60.000 mPa.s, insbesondere > 75.000 mPa.s aufweist, gemessen mittels Brookfield - Rotationsviskosimeter als 2%ige gequollene wässrige Lösung bei 5 Upm und 25°C.

4. Verfahren nach Anspruch 3, **dadurch gekennzeichnet, dass** dem Farbsystem die Stärke der Stärke - Cellulose Kombination am Ende der Farbrezeptur, vor der Zugabe des Bindemittels zugemischt wird.

5. Dispersionsfarbverdickerkombination, umfassend Stärke(n) bzw. Stärkederivate zusammen mit mindestens einer hochviskosen Cellulose, wobei die Cellulose eine Viskosität > 50.000 mPa.s, vorzugsweise > 60.000 mPa.s, insbesondere > 75.000 mPa.s aufweist, gemessen mittels Brookfield - Rotationsviskosimeter als 2%ige gequollene wässrige Lösung bei 5 Upm und 25°C .

6. Dispersionsfarbverdickerkombination nach Anspruch 5, **dadurch gekennzeichnet, dass** die hochviskosen Cellulosen ausgewählt sind aus der Gruppe umfassend Hydroxyethylcellulose (HEC), Methylcellulose (MC), Methylhydroxyethylcellulose (MHEC), Ethylhydroxyethylcellulose (EHEC), Hydroxypropylcellulose (HPC), Carboxymethylcellulose (CMC), kationische Cellulosen sowie Kombination hievon.

7. Dispersionsfarbverdickerkombination nach einem der Ansprüche 5 oder 6, **dadurch gekennzeichnet, dass** die Stärke auf Maisstärke, Weizenstärke, Kartoffelstärke, Tapiokastärke, Maniokstärke, Erbsenstärke, Reisstärke, Amaranthstärke, Roggenstärke, Gerstenstärke bzw. deren natürlichen und transgenen Waxyformen bzw. deren natürlichen und transgenen Hochamyloseformen basiert.

8. Dispersionfarbverdickerkombination nach einem der Ansprüche 5 bis 7, **dadurch gekennzeichnet, dass** die Stärke das Produkt einer Veresterung ist.

9. Dispersionsfarbverdickerkombination nach Anspruch 8, **dadurch gekennzeichnet, dass** die Stärke das Produkt einer Veresterung mit Mono-, Di- oder Tricarbonsäuren mit einer Alkylkette mit 1 - 30 Kohlenstoffatomen oder ein Carbamat ist.

10. Dispersionsfarbverdickerkombination nach Anspruch 9, **dadurch gekennzeichnet, dass** die Stärke acyliert, vorzugsweise succinyliert, octenylsuccinyliert, dodecylsuccinyliert oder acetyliert ist.

11. Dispersionsfarbverdickerkombination nach einem der Ansprüche 5 bis 7, **dadurch gekennzeichnet, dass** die Stärke das Produkt einer Veretherung ist.

12. Dispersionsfarbverdickerkombination nach Anspruch 11, **dadurch gekennzeichnet, dass** die Stärke eine Methyl-, Ethyl-, Hydroxyethyl-, Hydroxypropyl-, Hydroxybutyl-, Carboxymethyl-, Cyanoethyl-, Carbamoylethyletherstärke oder ein Gemisch derselben ist.

13. Dispersionsfarbverdickerkombination nach einem der Ansprüche 5 bis 7, **dadurch gekennzeichnet, dass** die Stärke eine pfropfpolymerisierte oder pfropfcopolymerisierte Stärke ist.

14. Dispersionsfarbverdickerkombination nach einem der Ansprüche 5 bis 7, **dadurch gekennzeichnet, dass** die Stärke eine carboxymethylierte Mais- oder Kartoffelstärke ist.

15. Dispersionsfarbverdickerkombination nach Anspruch 14, **dadurch gekennzeichnet, dass** die Stärke einen Substitutionsgrad der Carboxymethylierung von DS 0,01 - 1,0, bevorzugt von DS 0,2 - 0,5 aufweist.

16. Dispersionsfarbverdickerkombination nach einem der Ansprüche 5 bis 15, **dadurch gekennzeichnet, dass** die Stärke als solches oder zusätzlich vernetzt ist.

17. Dispersionsfarbverdickerkombination nach Anspruch 16, **dadurch gekennzeichnet, dass** die Stärke mit Epichlorhydrin, Adipinsäure, Phosphoroxychlorid oder Natriumtrimetaphosphat als solches oder zusätzlich vernetzt ist.

18. Dispersionsfarbverdickerkombination nach Anspruch 16, **dadurch gekennzeichnet, dass** die Stärke als solches oder zusätzlich acetalvernetzt ist.

19. Dispersionsfarbverdickerkombination nach Anspruch 18, **dadurch gekennzeichnet, dass** die Stärke glyoxalvernetzt oder propionaldehydvernetzt ist.

20. Dispersionsfarbverdickerkombination nach einem der Ansprüche 5 bis 19, **dadurch gekennzeichnet, dass** die Stärke oder modifizierte Stärke kaltwasserlöslich ist.

21. Dispersionfarbe enthaltend eine Dispersionsfarbverdickerkombination nach einem der Ansprüche 5 bis 20.

## Claims

1. The combined use of starch(es) or starch derivatives with at least one high-viscosity cellulose as a thickener in dispersion-binder-based paint systems, wherein said cellulose has a viscosity of >50,000 mPa.s, preferably >60,000 mPa.s and, in particular, >75,000 mPa.s, measured by the Brookfield rotation viscometer as a 2% swollen aqueous solution at 5 rpm and 25°C.

2. A method for producing dispersion-binder-based paint systems, **characterized in that** a combination of starch(es) with at least one high-viscosity cellulose is admixed to the paint system as a thickener, said cellulose having a viscosity of >50,000 mPa.s, preferably >60,000 mPa.s and, in particular, >75,000 mPa.s, measured by the Brookfield rotation viscometer as a 2% swollen aqueous solution at 5 rpm and 25°C.

3. A method for producing dispersion-binder-based paint systems, **characterized in that** starch(es) and at least one high-viscosity cellulose are admixed to the paint system as a thickener separately at different times, said cellulose having a viscosity of >50,000 mPa.s, preferably >60,000 mPa.s and, in particular, >75,000 mPa.s, measured by the Brookfield rotation viscometer as a 2% swollen aqueous solution at 5 rpm and 25°C.

4. A method according to claim 3, **characterized in that** the starch of the starch-cellulose combination is admixed to the paint system at the end of the paint formulation prior to the addition of the binder.

5. A dispersion paint thickener combination, comprising starch(es) and/or starch derivatives along with at least one high-viscosity cellulose, said cellulose having a viscosity of >50,000 mPa.s, preferably >60,000 mPa.s and, in particular, >75,000 mPa.s, measured by the Brookfield rotation viscometer as a 2% swollen aqueous solution at 5 rpm and 25°C.

6. A dispersion paint thickener combination according to claim 5, **characterized in that** the high-viscosity celluloses are selected from the group comprising hydroxyethyl cellulose (HEC), methyl cellulose (MC), methyl hydroxyethyl cellulose (MHEC), ethyl hydroxyethyl cellulose (EHEC), hydroxypropyl cellulose (HPC), carboxymethyl cellulose (CMC), cationic celluloses and combinations thereof.

7. A dispersion paint thickener combination according to any one of claims 5 or 6, **characterized in that** the starch is based on corn (maize) starch, wheat starch, potato starch, tapioca starch, manioca starch, pea starch, rice starch, amaranth starch, rye starch, barley starch and their natural and transgenic waxy forms and natural and transgenic high-amylose forms, respectively.

8. A dispersion paint thickener combination according to any one of claims 5 to 7, **characterized in that** the starch is the product of an esterification.

9. A dispersion paint thickener combination according to claim 8, **characterized in that** the starch is the product of an esterification with mono-, di- or tricarboxylic acids having alkyl chains with 1-30 carbon atoms, or a carbamate.

10. A dispersion paint thickener combination according to claim 9, **characterized in that** the starch is acylated, preferably succinylated, octenylsuccinylated, dodecylsuccinylated or acetylated.

11. A dispersion paint thickener combination according to any one of claims 5 to 7, **characterized in that** the starch is the product of an etherification.

12. A dispersion paint thickener combination according to claim 11, **characterized in that** the starch is a methyl, ethyl, hydroxyethyl, hydroxypropyl, hydroxybutyl, carboxymethyl, cyanoethyl, carbamoylethylether starch or a mixture thereof.

13. A dispersion paint thickener combination according to any one of claims 5 to 7, **characterized in that** the starch is a graft-polymerized or graft-copolymerized starch.

14. A dispersion paint thickener combination according to any one of claims 5 to 7, **characterized in that** the starch is a carboxymethylated corn (maize) or potato starch.

15. A dispersion paint thickener combination according to claim 14, **characterized in that** the starch has a carboxymethylation degree of substitution of DS 0.01-1.0, preferably DS 0.2-0.5.

16. A dispersion paint thickener combination according to any one of claims 5 to 15, **characterized in that** the starch is cross-linked, either as such or additionally.

17. A dispersion paint thickener combination according to claim 16, **characterized in that** the starch is cross-linked with epichlorohydrine, adipic acid, phosphoroxychloride or sodium trimetaphosphate, either as such or additionally.

18. A dispersion paint thickener combination according to claim 16, **characterized in that** the starch is acetal cross-linked, either as such or additionally.

19. A dispersion paint thickener combination according to claim 18, **characterized in that** the starch is glyoxal cross-linked or propionaldehyde cross-linked.

20. A dispersion paint thickener combination according to any one of claims 5 to 19, **characterized in that** the starch, or modified starch, is cold-water-soluble.

21. A dispersion paint, comprising a dispersion paint thickener combination according to any one of claims 5 to 20.

## Revendications

1. Utilisation combinée d'amidon(s) ou de dérivés d'amidon en commun avec au moins une cellulose hautement visqueuse, en tant qu'épaississant dans des systèmes de peinture à base de liants en dispersion, la cellulose présentant une viscosité > 50.000 mPa.s, de préférence > 60.000 mPa.s, en particulier > 75.000 mPa.s, mesurée au moyen d'un viscosimètre rotatif de Brookfield, sous forme de solution aqueuse à 2%, gonflée, à 5 tours/minute et 25°C.

2. Procédé de fabrication de systèmes de peinture à base de liants en dispersion, **caractérisé en ce que** l'on additionne au système de peinture une combinaison d'amidon(s) en commun avec au moins une cellulose hautement visqueuse, en tant qu'épaississant, la cellulose présentant une viscosité > 50.000 mPa.s, de préférence > 60.000 mPa.s, en particulier > 75.000 mPa.s, mesurée au moyen d'un viscosimètre rotatif de Brookfield, sous forme de solution aqueuse à 2%, gonflée, à 5 tours/ minute et 25°C.

3. Procédé de fabrication de systèmes de peinture à base de liants en dispersion, **caractérisé en ce que** l'on mélange au système de peinture, de manière séparée à des instants différents, de l'amidon ou des amidons et au moins une cellulose hautement visqueuse, en tant qu'épaississant, la cellulose présentant une viscosité > 50.000 mPa.s, de préférence > 60.000 mPa.s, en particulier > 75.000 mPa.s, mesurée au moyen d'un viscosimètre rotatif de Brookfield, sous forme de solution aqueuse à 2%, gonflée, à 5 tours/ minute et 25°C.

4. Procédé selon la revendication 3, **caractérisé en ce que** l'amidon de la combinaison amidon-cellulose est mélangé au système de peinture, en fin de recette de la peinture, avant l'addition du liant.

5. Combinaison d'épaississant pour peinture à dispersion, comprenant de l'amidon ou des amidons ou des dérivés d'amidon en commun avec au moins une cellulose hautement visqueuse, la cellulose présentant une viscosité > 50.000 mPa.s, de préférence > 60.000 mPa.s, en particulier > 75.000 mPa.s, mesurée au moyen d'un viscosimètre rotatif de Brookfield, sous forme de solution aqueuse à 2%, gonflée, à 5 tours/ minute et 25°C.

6. Combinaison d'épaississant pour peinture à dispersion selon la revendication 5, **caractérisée en ce que** les celluloses hautement visqueuses sont choisies parmi le groupe comprenant hydroxyéthylcellulose (HEC), méthylcellulose (MC), méthylhydroxyéthylcellulose (MHEC), éthylhydroxyéthylcellulose (EHEC), hydroxypropylcellulose (HPC), carboxyméthylcellulose (CMC), des celluloses cationiques, ainsi que des combinaisons de celles-ci.

7. Combinaison d'épaississant pour peinture à dispersion selon l'une des revendications 5 ou 6, **caractérisée en ce que** l'amidon est à base d'amidon ou fécule de maïs, de blé, de pommes de terre, de tapioca, de manioc, de petit-pois, de riz, d'amaranth, de seigle, d'orge, respectivement de leurs formes waxy naturelles ou transgéniques, et respectivement de leurs formes riches en amylose, naturelles ou transgéniques.

8. Combinaison d'épaississant pour peinture à dispersion selon l'une des revendications 5 à 7, **caractérisée en ce que** l'amidon est le produit d'une estérification.

9. Combinaison d'épaississant pour peinture à dispersion selon la revendication 8, **caractérisée en ce que** l'amidon est le produit d'une estérification avec des acides mono-, di- ou tricarboniques avec une chaîne alkyle avec 1 à 30 atomes de carbone, ou un carbamate.

10. Combinaison d'épaississant pour peinture à dispersion selon la revendication 9, **caractérisée en ce que** l'amidon est acylé, de préférence succinylé, octenylsuccinylé, dodecylsuccinylé ou acéthylé.

11. Combinaison d'épaississant pour peinture à dispersion selon l'une des revendications 5 à 7, **caractérisée en ce que** l'amidon est le produit d'une éthérification.

12. Combinaison d'épaississant pour peinture à dispersion selon la revendication 11, **caractérisée en ce que** l'amidon est un amidon méthyle-, éthyle-, hydroxyéthyle-, hydroxypropyle-, hydroxybutyle-, carboxyméthyle-, cyanoéthyle-, carbamoyléthyleéther, ou un mélange de ceux-ci.

13. Combinaison d'épaississant pour peinture à dispersion selon l'une des revendications 5 à 7, **caractérisée en ce que** l'amidon est un amidon de polymérisation par greffage ou de copolymérisation par greffage.

14. Combinaison d'épaississant pour peinture à dispersion selon l'une des revendications 5 à 7, **caractérisée en ce que** l'amidon est un amidon de mais ou de pommes de terre carboxyméthylé.

15. Combinaison d'épaississant pour peinture à dispersion selon la revendication 14, **caractérisée en ce que** l'amidon présente un degré de substitution de la carboxyméthylation de DS 0,01 - 1,0, de préférence de DS 0,2 - 0,5.

16. Combinaison d'épaississant pour peinture à dispersion selon l'une des revendications 5 à 15, **caractérisée en ce que** l'amidon est réticulé en tant que tel ou en supplément.

17. Combinaison d'épaississant pour peinture à dispersion selon la revendication 16, **caractérisée en ce que** l'amidon est réticulé avec de l'épichlorhydrine, de l'acide adipique, de l'oxychlorure de phosphore, ou du trimétaphosphate de sodium, en tant que tel ou en supplément.

18. Combinaison d'épaississant pour peinture à dispersion selon la revendication 16, **caractérisée en ce que** l'amidon est réticulé en présence d'acétale, en tant que tel ou en supplément.

19. Combinaison d'épaississant pour peinture à dispersion selon la revendication 18, **caractérisée en ce que** l'amidon est réticulé en présence de glyoxale ou d'aldéhyde propionique.

20. Combinaison d'épaississant pour peinture à dispersion selon l'une des revendications 5 à 19, **caractérisée en ce que** l'amidon ou l'amidon modifié est soluble dans l'eau froide.

21. Peinture à dispersion renfermant une combinaison d'épaississant pour peinture à dispersion selon l'une des revendications 5 à 20.
